# EUROPEAN PATENT SPECIFICATION

(11) **EP 3 852 261 B1**
(45) Date of publication and mention of the grant of the patent: **09.12.2026**
(21) Application number: 21151774.3
(22) Date of filing: 15.01.2021
(51) Int. Cl.: H02M 7/483, H02M 7/49, H02M 7/487

(54) **COUPLED INDUCTORS INVERTER TOPOLOGY**
UMRICHTERTOPOLOGIE MIT GEKOPPELTEN DROSSELN
TOPOLOGIE D'ONDULEUR À INDUCTEURS COUPLÉS

(30) Priority: 15.01.2020 US 202062961377 P; 13.01.2021 US 202117148322
(43) Date of publication of application: 21.07.2021
(73) Proprietor: Solaredge Technologies Ltd., 4673335 Herzeliya (IL)
(72) Inventor: ZMOOD, Daniel, 4673335 Herzeliya (IL); FRIED, Ohad, 4673335 Herzeliya (IL); SZLAFSZTEIN, Omer, 4673335 Herzeliya (IL)
(74) Representative: V.O.

(56) References cited:
- EP-A1- 3 174 190
- WO-A1-2019/092305
- CN-A- 1 815 840
- CN-A- 105 024 575
- CN-A- 105 305 860
- CN-A- 105 703 334
- CN-A- 106 129 957
- CN-Y- 201 075 363
- US-A1- 2010 226 160
- US-A1- 2014 159 481
- US-A1- 2015 062 984
- US-A1- 2016 268 923
- US-A1- 2018 191 270
- US-A1- 2019 363 644
- US-A1- 2019 393 802
- QUAN ZHONGYI ET AL: "Multilevel Voltage-Source Converter Topologies With Internal Parallel Modularity", IEEE TRANSACTIONS ON INDUSTRY APPLICATIONS, IEEE SERVICE CENTER, PISCATAWAY, NJ, US, vol. 56, no. 1, 16 September 2019 (2019-09-16), pages 378 - 389, XP011766823, ISSN: 0093-9994, [retrieved on 20200117], DOI: 10.1109/TIA.2019.2941924
- LI YUZHUO ET AL: "Systematic Synthesis and Derivation of Multilevel Converters Using Common Topological Structures With Unified Matrix Models", IEEE TRANSACTIONS ON POWER ELECTRONICS, INSTITUTE OF ELECTRICAL AND ELECTRONICS ENGINEERS, USA, vol. 35, no. 6, 21 October 2019 (2019-10-21), pages 5639 - 5659, XP011774595, ISSN: 0885-8993, [retrieved on 20200225], DOI: 10.1109/TPEL.2019.2948580
- DE SOUZA TAMIRES SANTOS ET AL: "Modeling and Control of a Nine-Phase Induction Machine With Open Phases", IEEE TRANSACTIONS ON INDUSTRY APPLICATIONS, IEEE SERVICE CENTER, PISCATAWAY, NJ, US, vol. 54, no. 6, 1 November 2018 (2018-11-01), pages 6576 - 6585, XP011691328, ISSN: 0093-9994, [retrieved on 20181010], DOI: 10.1109/TIA.2018.2852282
- LIBBOS ELIE ET AL: "Variable-Pole Induction Machine Drive for Electric Vehicles", 2019 IEEE INTERNATIONAL ELECTRIC MACHINES & DRIVES CONFERENCE (IEMDC), IEEE, 12 May 2019 (2019-05-12), pages 515 - 522, XP033588595, [retrieved on 20190801], DOI: 10.1109/IEMDC.2019.8785212

## Description

### CROSS-REFERENCE TO RELATED APPLICATIONS

This application is a non-provisional of and claims priority to U.S. Provisional Patent Application No. 62/961,377, filed January 15, 2020.

### BACKGROUND

A multilevel inverter is a power electronic device that is capable of providing a desired alternating current (AC) voltage level at its output. The desired AC voltage output is output by conversion of one or more input direct current (DC) voltage levels at the multilevel inverter input. A multilevel inverter with three or more output voltage levels may provide a combined voltage (*Vout*) at its output. Compared to an inverter with two levels of voltage combined together at its output, the combined voltage (*Vout*) of the multilevel inverter may have a lower differential change in voltage with respect to time. The lower differential change in voltage may therefore provide a lower harmonic distortion of the combined voltage (*Vout*). The lower harmonic distortion of the combined voltage (*Vout*) may therefore provide an increased smoothness of the combined voltage (*Vout*). Increased smoothness of the combined voltage (*Vout*) may be proportional to the increase in the number of output voltage levels. However, the smoother combined voltage (*Vout*) of the multilevel inverter may demand a controller with increased complexity. The increased number of output voltage levels may also further demand an increased number of components for the realization of the multilevel inverter. The increased number of components may include more switches when compared to the inverter with two levels of voltage combined together at its output. The inverter with two levels of voltage combined together at its output may require a controller with less complexity.

Document US2019363644 discloses a modular internal parallelization based active neutral point clamped (IP-ANPC) converter with flying capacitor voltage balancing. Documents WO2019092305, CN105024575, CN106129957, CN201075363 and CN1815840 are examples of circuit breakers in inductor current paths.

### SUMMARY

The following summary is a short summary of some of the inventive concepts for illustrative purposes only, and is not intended to limit or constrain the inventions and examples in the detailed description.

The invention is defined by the features of claim 1. The dependent claims recite advantageous embodiments of the invention.

Illustrative embodiments disclosed herein may be with respect to power sources in a power system, which may include the interconnection of various groups of power sources. Each group of power sources may contain different types of power derived from renewable energy sources and non-renewable energy sources. The renewable energy sources may be provided from photovoltaic (PV) systems, wind or wave power. Examples of non-renewable energy sources may include fuel used to drive turbines or generators, for example.

Illustrative embodiments disclosed herein may include a power system utilized to supply power to a load and/or a storage device. The power system may include various inter connections of groups of direct current (DC) power sources that also may be connected in various series, parallel, series parallel and parallel series combinations, for example. Some illustrative embodiments may involve the connection of DC sources to a power converter circuit to provide an alternating current (AC) on its output. The power converter circuit may be a multi-level inverter topology, which may include a pair of input terminals and a first series connection of a first capacitor and a second capacitor. The first series connection may be connected across the pair of input terminals. A connection of the first capacitor to the second capacitor may be at a first terminal. A second series connection may include a first switch, a second switch, a third switch and a fourth switch connected in series. The second series connection may be connected across the pair of input terminals. A connection of the first switch to the second switch may be at a second terminal. And a connection of the second switch to the third switch may be at a third terminal. A connection of the third switch to the fourth switch may be at a fourth terminal. The first terminal may connect to the third terminal.

A plurality of other series connections of two or more switches may be connected across the second terminal and the fourth terminal. Each of the plurality of other series connections of two or more switches may comprise an intermediate (e.g., central) node. A respective inductor may be coupled to each of the intermediate (e.g., central) nodes, connected between the intermediate node and a (e.g., output) terminal, configured to combine the voltages of the intermediate (e.g., central) node.

The (e.g., output) terminal configured to combine the voltages of the intermediate (e.g., central) nodes may be a single-phase output with respect to at least one of a neutral potential, an earth potential, or another terminal of the power converter circuit. The output terminal of the power converter circuit may be powered by converting a DC input voltage connected to the pair of input terminals to an AC output voltage.

Each of the respective inductors may have mutual inductance with at least one of the other inductors. The power converter circuit may further include a controller operably attached and configured to control, by pulse width modulated (PWM) signals, each of the switches of the second series connection, and each of the plurality of other series connections of two or more switches, which may be connected across the second terminal and the fourth terminal. The controller may be operable to convert, using the second series connection, a DC input voltage connected to the pair of input terminals to provide multi-level AC voltages with DC offset (with respect to at least one of the pair of input terminals) across the second terminal and the fourth terminal.

The controller may measure/sense the current flowing through the coupled inductors and may control, by changing the PWM signals, switches (e.g., MOSFETs/IGBTs) to balance the currents flowing through the inductors/legs.

In some aspects, the coupled inductors may be coupled to the output terminal through relays. The controller may use relays for connecting the power converter circuit (e.g., an inverter) to a grid/load. The relays may also function as a circuit breaker and/or a protective mechanism to prevent high current/voltage or unintentional feeding of the electrical device into a sub grid or a stand-alone grid, often referred to as an anti-islanding operation. Based on an interruption (e.g., the grid "going down") or a fault detection, the controller may operate the relays to disconnect the output terminal from the grid/load to ensure safety and to prevent damage to the electrical circuit or the grid.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures.
Fig. 1 illustrates a diagram of an electrical circuit according to aspects of the disclosure.
Fig. 2 illustrates a diagram of an electrical circuit according to aspects of the disclosure.
Fig. 3 illustrates a timing diagram of an electrical circuit according to aspects of the disclosure.
Fig. 4 illustrates a timing diagram of an electrical circuit according to aspects of the disclosure.
Fig. 5 illustrates a block diagram according to aspects of the disclosure.
Fig. 6 illustrates a diagram of an electrical circuit according to aspects of the disclosure.
Fig. 7 illustrates a timing diagram of an electrical circuit according to aspects of the disclosure.
Fig. 8 illustrates waveforms associated with electrical circuits according to aspects of the disclosure.
Fig. 9 illustrates a diagram of an electrical circuit according to aspects of the disclosure.
Fig. 10 illustrates a diagram of an electrical circuit according to aspects of the disclosure.
Fig. 11 illustrates a diagram of an electrical circuit according to aspects of the disclosure.
Fig. 12 illustrates a diagram of an electrical circuit according to aspects of the disclosure.
Fig. 13 illustrates a diagram of an electrical circuit according to aspects of the disclosure.
Fig. 14 illustrates a diagram of an electrical circuit according to aspects of the disclosure.
Fig. 15 illustrates a diagram of an electrical circuit according to aspects of the disclosure.

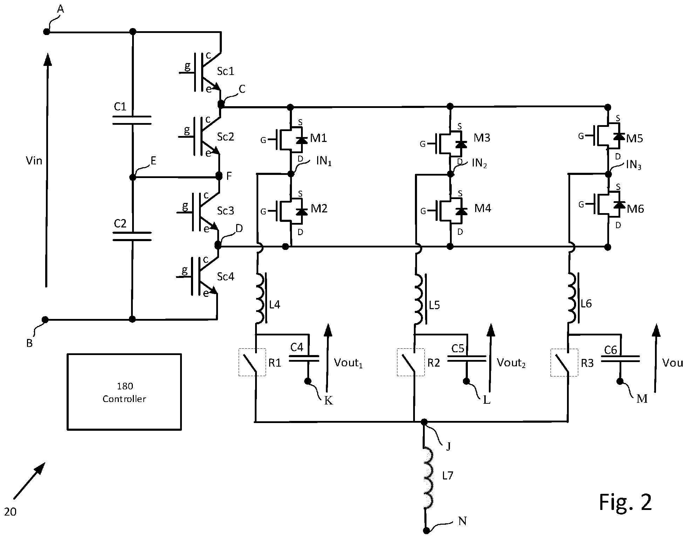

The features of claim 1 are reflected by the embodiment shown in figure 2. The other figures serve to illustrate further details and principles of the invention.

### DETAILED DESCRIPTION

In the following description of various aspects of the disclosure, reference is made to the accompanying drawings, which form a part hereof, and in which is shown, by way of illustration, various embodiments in which aspects of the disclosure may be practiced. It is to be understood that other embodiments may be utilized and structural and functional modifications may be made, without departing from the scope of the present disclosure.

Features of one or more aspects disclosed herein may relate to a power converter circuit (e.g., multilevel inverter). The power converter circuit may be capable of providing a desired alternating current (AC) voltage level at its output from direct current (DC) voltage applied to its input. The power converter circuit may be realized by a multi-level inverter circuit topology. The desired AC voltage output is output from conversion of multiple DC voltage levels via an intermediate converter included in the multi-level inverter circuit topology.

The term "PWM" as used herein is with respect to the operation of switches described below. Unless otherwise stated, the term "PWM" refers to an active use of a switch for a period of time. The active use of the switch during the period of time may include the switch being opened and closed repeatedly during the time period. The term "ON" as used herein with respect to the operation of switches described below, refers to the active use of a switch during a time period. When a switch is "ON", the switch remains substantially closed for an "ON" time period. The term "OFF" as used herein is with respect to the operation of switches described below and refers to active use of a switch during the time period. When a switch is "OFF", the switch remains substantially open for an "OFF" time period.

The term "multiple" as used here in the detailed description indicates the property of having or involving several parts, elements, or members. The claim term "a plurality of" as used herein in the claims section finds support in the description with use of the term "multiple" and/or other plural forms. Other plural forms may include for example regular nouns that form their plurals by adding either the letter 's' or 'es' so that the plural of converter is converters or the plural of switch is switches, for example.

The claim terms "comprise", "comprises" and/or "comprising" as used herein in the claims section finds support in the description with use of the terms "may", "include", "includes" "including", etc.

The terms, "substantially", and, "about", used herein include variations that are equivalent for an intended purpose or function (e.g., within a permissible variation range). Certain ranges are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating unrequited number may be a number, which, in the context in which it is presented, provides the substantial equivalent of the specifically recited number.

All values are examples, and are not meant to be taken as limiting. Also, all given values include values that are substantially equal to the given values. For example, a given value of 100A can include any value that would be operationally equivalent, e.g., about 99.5A, 101A, 98.5A, etc.

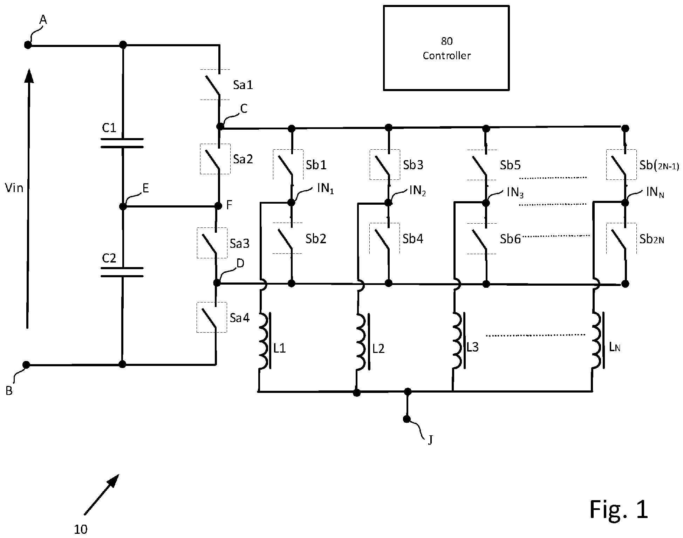

Reference is made to Fig. 1, which illustrates a circuit diagram of a power converter circuit **10** according to illustrative aspects of the disclosure. Fig. 1 provides an example of a multi-level inverter circuit topology. Thus, in the example embodiment of Fig. 1, the power converter circuit **10** is an example of a multilevel inverter. A direct current (DC) input voltage **Vin** may be applied across input terminals **A** and **B.** Input voltage **Vin** may be a DC voltage received from one or more DC power sources, e.g. a battery, a photovoltaic panel, a rectified source of alternating current (AC) from an AC generator, etc.

In some aspects, power converter circuit **10** may comprise a controller **80,** for example: a digital signal processing (DSP) circuit, a field programmable gate array (FPGA) device, etc. Controller **80** may control power converter circuit **10** and its components (for example, switches, voltages, etc.) based on a predetermined algorithm, a measured parameter (e.g., a measurement collected by one or more sensors), a calculated parameter, determined or estimated (e.g., based on one or more measured parameters) parameter, any other appropriate data, etc. As an example, the electrical parameter may be: current, voltage, power, frequency, etc. In some aspects, controller **80** may comprise sensors to measure or sense one or more electrical parameters.

A series connection of capacitors **C1** and **C2** may be connected across input terminals **A** and **B.** In some aspects, capacitors **C1** and **C2** may be replaced by a plurality of series and/or parallel connected capacitors. Node **E** may be the point of connection between capacitors **C1** and **C2** (e.g., intermediate node). Node **E** may be coupled to neutral and/or earth potential.

A series connection of switches **Sa1**, **Sa2, Sa3** and **Sa4** may also be connected across input terminals **A** and **B.** A first terminal of switch **Sa1** may be coupled to input terminal **A** and a second terminal of switch **Sa1** may be coupled to node **C.** A first terminal of switch **Sa2** may be coupled to node **C** and a second terminal of switch **Sa2** may be coupled to node **F.** Node **F** may be coupled to node **E** directly so that Nodes **E** and **F** have the same electric potential. A first terminal of switch **Sa3** may be coupled to node **F** and a second terminal of switch **Sa3** may be coupled to node **D.** A first terminal of switch **Sa4** may be coupled to node **D** and a second terminal of switch **Sa4** may be coupled to input terminal **B.**

A plurality of series connections of two or more switches may be connected across nodes **C** and **D.** For example, circuit **10** of Fig. 1 comprises **N** (e.g., N≥2) series connections of two switches, such that each one the series connections are coupled in parallel with respect to each other. A series connection of switches **Sb1** and **Sb2** may be connected across nodes **C** and **D.** A terminal of **Sb1** and a terminal of **Sb2** may be coupled to intermediate (e.g., central) node **IN₁**. As shown in Fig. 1, intermediate node **IN₁** is a central node between two of the switches (Sb1 and Sb2) belonging to one of the series connections. If the series connection had three switches, intermediate node **IN₁** could be the node between the first and second switches or between second and third switches. A series connection of switches **Sb3** and **Sb4** may also be connected across nodes **C** and **D.** A terminal of **Sb3** and a terminal of **Sb4** may be coupled to intermediate node **IN₂**. A series connection of switches **Sb5** and **Sb6** may also be connected across nodes **C** and **D.** A terminal of **Sb5** and a terminal of **Sb6** may be coupled to intermediate node **IN₃.** A series connection of switches **Sb_{(2N-1)}** and **Sb_{2N}** may also be connected across nodes **C** and **D.** A terminal of **Sb_{(2N-1)}** and a terminal of **Sb_{2N}** may be coupled to intermediate node **IN_{N}**.

A corresponding first terminal of inductors **L1, L2, L3...L_{N}** may be coupled to node **J** (e.g., an output terminal) and a corresponding second terminal of inductors **L1, L2, L3...L_{N}** may be coupled respectively to terminals **IN₁, IN₂, IN₃... IN_{N}**. Terminal **J** may combine the voltages of the output legs. In some aspects, terminal **J** may be an output terminal of power converter circuit **10** that may output an AC sine wave (e.g., with DC offset). For example, terminal **J** may be an output terminal of one phase in a single-phase / three-phase / multi-phase converter. Inductors **L1, L2, L3...L_{N}** may be mutually coupled together. Inductors **L1, L2, L3...L_{N}** may be utilized to smooth a sine-wave of an AC output of power converter circuit **10.**

Controller **80** may control switches **Sa1**, **Sa2, Sa3** and **Sa4.** Switches **Sa1**, **Sa2, Sa3** and **Sa4** may be switched at a first frequency. The first frequency may be the output frequency (e.g., grid frequency, load frequency, utility frequency, (power) line frequency, 50Hz-60Hz, etc.). Switches **Sa1** and **Sa3** may be closed/turned ON/conducting substantially at the same time, and may be open/turned OFF/nonconducting substantially at the same time (e.g., switches Sa1 and Sa3 may be controlled in a corresponding manner, for example, based on a common control signal). Switches **Sa2** and **Sa4** may be closed/turned ON/conducting substantially at the same time, and may be open/turned OFF/non-conducting substantially at the same time (e.g., switches Sa2 and Sa4 may be controlled in a corresponding manner, for example based on a common signal) and in a complementary manner with regard to switches **Sa1** and **Sa3** (e.g., when switches **Sa1** and **Sa3** are closed, **Sa2** and **Sa4** may be open).

Controller **80** may control switches **Sb1, Sb2, Sb3, Sb4, Sb5, Sb6...Sb_{(2N-1)}**, **Sb_{2N}**. Switches **Sb1, Sb2, Sb3, Sb4, Sb5, Sb6...Sb_{(2N-1)}**, **Sb_{2N}** may be switched at a second frequency. The second frequency may be higher than the first frequency. Switch **Sb1** may be switched in a complementary manner with regard to switch **Sb2.** For example, switch **Sb1** may be closed/turned ON/conducting when switch **Sb2** is open/turned OFF/non-conducting, and switch **Sb1** may be open/turned OFF/non-conducting when switch **Sb2** is closed/turned ON/conducting. Switch **Sb3** may be switched in a complementary manner with regard to switch **Sb4.** Switch **Sb5** may be switched in a complementary manner with regard to switch **Sb6.** Switch **Sb_{(2N-1)}** may be switched in a complementary manner with regard to switch **Sb_{2N}.** Also, in an embodiment with more than two switches in any one series connection, two or more of the switches may be switched (like **Sb_{(2N-1)}**) in a complementary manner with regard to the remaining switches of that series connection (like **Sb_{2N}**). In some aspects, switches **Sb1, Sb3, Sb5... Sb_{2N}** may be switched in a phase-shifted manner. For generalization, in a circuit comprising a plurality of **N** series connections of two or more switches, each series connection may be switched with phase-shift of **360°/N** with respect to each other. For example, where N=3 the switches may be switched with phase-shift of 120°.

For example, the switches of power converter circuit **10** of Fig. 1 (**Sa1**, **Sa2, Sa3, Sa4, Sb1, Sb2, Sb3, Sb4, Sb5, Sb6...Sb_{(2N-1)}**, **Sb_{2N}**) may be insulated gate bipolar transistors (IGBTs), metal oxide semiconductor field effect transistors (MOSFETs), bipolar junction transistors (BJTs), field effect transistors (FETs), silicone-controlled rectifiers (SCRs) or any known solid-state switch, or any combination of these components.

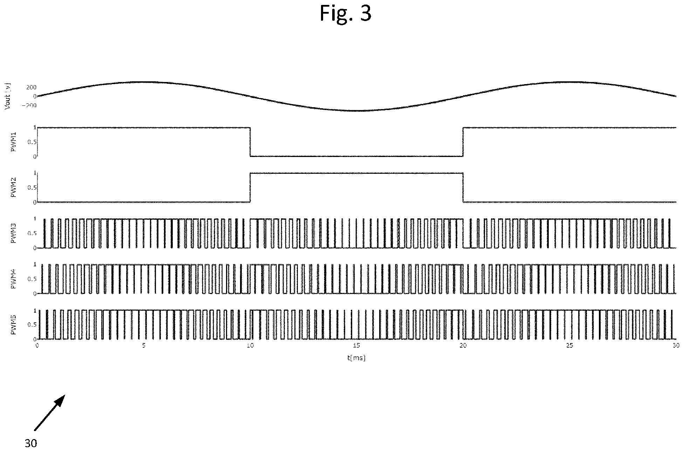

In some aspects, switches **Sb1, Sb2, Sb3, Sb4 Sb5, Sb6...Sb_{(2N-1)}**, **Sb_{2N}** may be switched according to the duty cycle ratio (which may be changed according to a comparison between a reference voltage and the output voltage **Vout**), where each group (e.g., pair) of series-connected switches (e.g., where **Sb1-Sb2** is the first pair, **Sb3-Sb4** is the second pair, **Sb5-Sb6** is the third pair... and **Sb_{(2N-1)}-Sb_{2N}** is the n^{th} pair) is shifted sequentially by **1/N** (where **N** is the number of series connections) of the switching period with respect to the other groups (e.g., pairs) of series-connected switches. The specific timing shown in Figs. 3-4 may be an example of the desired duty cycles, but a variety of different timings may be used that may have similar or different switching performance.

Reference is now made to Fig. 2, which illustrates a diagram of electrical circuit **20** (e.g., multilevel inverter), an example of power converter circuit **10** of Fig. 1, according to aspects of the disclosure. In Fig. 2, inductors **L1, L2, L3** of Fig. 1 may be replaced by mutually coupled inductors **L4, L5, L6.** Controller **80** of Fig. 1 may be replaced by controller **180.**

As shown in Fig. 2, in some aspects, switches **Sa1**, **Sa2, Sa3** and **Sa4** of Fig. 1 are insulated gate bipolar transistors (IGBTs).

For example, electrical circuit **20** comprises IGBTs **Sc1, Sc2, Sc3** and **Sc4.** Controller **180** may control the gate (g) of IGBTs **Sc1, Sc2, Sc3** and **Sc4.** The collector (**c**) of IGBT **Sc1** may be coupled to input terminal **A.** At node **C,** the emitter (**e**) of IGBT **Sc1** may be coupled to the collector (**c**) of IGBT **Sc2.** At node **F,** the emitter (**e**) of IGBT **Sc2** may be coupled to the collector (**c**) of IGBT **Sc3.** Node **F** may be coupled to node **E.** At node **D,** the emitter (**e**) of IGBT **Sc3** may be coupled to the collector (**c**) of IGBT **Sc4.** The emitter of IGBT **Sc4** may be coupled to input terminal **B.**

As shown in Fig. 2, in some aspects, switches **Sb1, Sb2, Sb3, Sb4, Sb5, Sb6** of Fig. 1 are metal oxide semiconductor field effect transistors (MOSFETs).

Fig. 2 also shows that the number **N** of series connections of two or more switches may be three (e.g., N=3). Accordingly, the three series connections including switches **Sb1, Sb2, Sb3, Sb4, Sb5, Sb6** in Fig. 1 are replaced by six MOSFETs **M1, M2, M3, M4, M5** and **M6** in Fig. 2. Controller **180** may control each one of MOSFETs **M1**, **M2, M3, M4, M5** and **M6.** Each one of MOSFETs **M1, M2, M3, M4, M5** and **M6** may be an n-type enhancement metal-oxide-semiconductor field-effect transistor comprising drain, source and gate terminals (denoted **D, S** and **G** respectively). In this example, controller **180** may control the voltage difference between the source and gate terminals of MOSFETs **M1, M2, M3, M4, M5** and **M6.**

The source terminals (**S**) of MOSFETs **M1**, **M3** and **M5** may be coupled to node **C.** At node **IN₁** the drain terminal (**D**) of MOSFET **M1** may be coupled to the source terminal (**S**) of MOSFET **M2.** At node **IN₂** the drain terminal (**D**) of MOSFET **M3** may be coupled to the source terminal (**S**) of MOSFET **M4.** At node **IN₃** the drain terminal (**D**) of MOSFET **M5** may be coupled to the source terminal (S) of MOSFET **M6.** The drain terminals (**D**) of MOSFETs **M2, M4** and **M6** may be coupled to node **D.**

In some aspects of the disclosure herein, controller **180** may operate MOSFETs **M1**, **M2, M3, M4, M5** and **M6** at a first frequency (e.g. high frequency), based on a modulation scheme that may include pulse width modulation (PWM), frequency modulation (FM), or a variable frequency plus variable pulse width modulation, for example. The modulation scheme may optimize spectrum and reduce ripple based on space vector (SV) modulation, types of phase disposition (PD) modulation, alternate phase opposition disposition (APOD) modulation, various multicarrier PWM strategies for multilevel inverters, etc. Controller **180** may operate IGBTs **Sc1, Sc2, Sc3** and **Sc4** at a second frequency (e.g. low frequency). The second frequency may be the load frequency, utility frequency, (power) line frequency, etc. In some aspects, the first frequency may be higher than the second frequency. For example, the first frequency may be 500 Hz, 1 kHz, 5 kHz, 25 kHz, 100 kHz, 500 kHz, 1 MHz, etc. and the second frequency may be 50Hz, 60Hz, 500 Hz, etc.

In some aspects of the disclosure herein, mutually coupled inductors **L4, L5, L6** may be coupled to terminal **J** optionally through additional circuit elements. Terminal **J** may combine the voltages at the output of the legs of (e.g., filter) inductors **L4, L5, L6.** For example, in Fig. 2, coupled inductors **L4, L5, L6** may be coupled to terminal **J** through relays **R1, R2** and **R3,** respectively. In some aspects, a (e.g., filter) capacitor may be coupled to one terminal of mutually coupled inductors **L4, L5, L6** (e.g., the terminal of the inductors L4, L5, and L6 that is coupled with relays **R1, R2** and **R3,** respectively). For example, in Fig. 2, capacitor **C4** may be coupled between a terminal of inductor **L4** and node **K,** capacitor **C5** may be coupled between a terminal of inductor **L5** and node **L,** and capacitor **C6** may be coupled between a terminal of inductor **L6** and node **M.** Nodes **K, L, M** may be coupled to nodes having a different voltage levels or to one or more nodes having a same voltage level. Further, one or more of nodes **K, L, M** may be coupled to a node of electrical circuit 20 having a reference voltage (e.g., node **E**) or another node having another voltage reference, such as neutral and/or earth potential. In Fig. 2, inductor **L7** (e.g., differential filter) may be coupled/connected between terminal **J** and node **N.** A single-phase AC output / sine wave with DC offset of power converter circuit **10** may be provided across capacitors **C4, C5** and **C6.** An AC output voltage **Vout** may be applied across capacitors **C4, C5** and **C6.** AC output voltages Vout1, Vout2, and Vout3 may be applied across capacitors **C4, C5,** and **C6,** respectively. AC output voltages Vout1, Vout2, and Vout3 may be similar at the second frequency and phase shifted at the first frequency by 120°.

In some aspects, capacitors **C4, C5** and **C6** may be replaced by a capacitor (or a plurality of capacitors) connected between terminal **J** and a reference terminal (e.g., node **E**).

In aspects of the disclosure herein, one or more of relays **R1, R2** and **R3** may comprise two or more relay contacts that may be provided using a multi-pole relay module. A multi-pole relay module incorporates a plurality of relays in a single package. A multi-pole relay module may enable the use of a common control coil for more than one relay contact, thereby reducing the size and the costs of the system. For example, a dual-pole relay module may have two contacts controlled by a single control coil so that a second control coil is not required, thereby reducing the relay array size, the dissipated energy during operation, the manufacturing costs, and/or the like.

In aspects of the disclosure herein, one or more of relays **R1, R2** and **R3** may use a different electrical contact configuration (e.g., single-pole single-throw (SPST), single-pole double-throw (SPDT), double-pole single-throw (DPST)). For example, when the relay array comprises two or more relays, using a DPST relay (e.g., a pair of switches or relays actuated by a single coil) may reduce the consumed energy for driving the control coils of the relay.

In some aspects of the disclosure, controller **180** may measure/sense or receive estimations and/or determinations (e.g., measurements collected by sensors) and/or data, of one or more electrical parameters of circuit **20.** For example, controller **180** may measure/sense the current flowing through each one of inductors **L4, L5, L6.** The current measurement/sensing of the current flowing through the coupled inductors **L4, L5, L6** may be used, by controller **180,** to balance the leg (e.g., inductors **L4, L5, L6**) currents. The current balance may be achieved by changing the PWM signals that may control the switches/MOSFETs/IGBTs. Current balance between the legs (e.g., inductors **L4, L5, L6**) may divide/split/control the output current of electrical circuit **20** in a substantially equal way between each of the output legs/ inductors **L4, L5, L6.** By virtue of the current balance between the legs, each of relays **R1, R2** and **R3** may be configured to conduct a lower peak current than if the leg currents were not balanced, thereby reducing the size and the costs of the system. For example, in a case where the output current of electrical circuit **20** is rated to a current at level of 30A, the current balance may ensure that a current of no more than 10A is flowing through each of the relays **R1, R2** and **R3.** Thus, a configuration of the electrical circuit 20 using lower-rated relays may be enabled by virtue of the current balance.

In some aspects of the disclosure, controller **180** may measure the current flowing through coupled inductors **L4, L5, L6** (e.g., differential current) and **L7,** voltage across capacitors **C4, C5, C6, C1,** and **C2,** etc. Based on detection of a differential current above a predetermined level, controller **180** may vary its control to amend the differential current (e.g., by changing the PWM signals).

Controller **180** may use relays **R1, R2** and **R3** for connecting electrical circuit **20** (e.g., an inverter, a power converter) to a grid/load. The relays **R1, R2** and **R3** may also function as a circuit breaker and/or a protective mechanism to prevent high current/voltage or unintentional feeding of the electrical device into a sub grid or a stand-alone grid, often referred to as an anti-islanding operation. Based on an interruption (e.g., the grid "going down") or a fault detection, relays **R1, R2** and **R3** may disconnect electrical circuit **20** from the grid/load to ensure safety and to prevent damage to electrical circuit **20** or the grid. Relays **R1, R2** and **R3** may be coupled with the outputs of or incorporated into electrical circuit **20.**

Reference is now made to Fig. 3, which illustrates timelines **30** showing waveforms that describe, according to some aspects of the disclosure, a possible control method of a power converter circuit (e.g., power converter circuit **10** and electrical circuit **20** of Figs. 1 and 2 respectively). The upper graph shows a waveform, in volts (V) versus time, for output voltage **Vout.** Output voltage **Vout** may be any one of AC output voltages Vout1, Vout2, and Vout3 of Fig. 2, with respect to a reference voltage (e.g., node **E,** neutral potential terminal, an earth potential terminal). Output voltage **Vout** in Fig. 3 may be the output power of power converter circuit **10** and electrical circuit **20** of Figs. 1 and 2, respectively. In some aspects, **Vout** may be filtered by a filter circuit comprising a capacitor to generate a substantially AC sinusoidal voltage waveform at the output of the filter circuit. In the example shown in Fig. 3, output voltage **Vout** may be a 50Hz sine-waveform of 230V_{RMS}. Graphs **PWM1, PWM2, PWM3, PWM4** and **PWM5** may represent PWM control signals used to control switches of the power converter circuit. The **PWM1, PWM2, PWM3, PWM4** and **PWM5** signals may be generated by digital encoding component(s) (e.g., a microprocessor) and/or analog circuit(s) (e.g., using a comparator, oscillator, etc.). For example, **PWM1, PWM2, PWM3, PWM4** and **PWM5** signals may be generated by controller **80** of Fig. 1 or controller 180 of Fig. 2.

In the example shown in Fig.3, signals **PWM1** and **PWM2** may be relative to the frequency of output voltage **Vout,** e.g., 50Hz. Signals **PWM1** and **PWM2** may be complementary with respect to each other. For example, signal **PWM1** may be applied to control switches **Sa1/Sa3** of Fig. 1 and/or the gate terminals (**g**) of IGBTs **Sc1/Sc3** of Fig. 2. Signal **PWM2** may be applied to control switches **Sa2/Sa4** of Fig. 1 and/or the gate terminals (**g**) of IGBTs **Sc1/Sc3** of Fig. 2.

In the example shown in Fig. 3, signals **PWM3, PWM4** and **PWM5** may be configured to control switches to be switched all during the same cycle. For example, signal **PWM3** may control the gate terminal (**G**) of MOSFET **M1** of Fig. 2, signal **PWM4** may control the gate terminal (**G**) of MOSFET **M3** of Fig. 2, and signal **PWM5** may control the gate terminal (**G**) of MOSFET **M5** of Fig. 2. A complementary PWM signal with respect to signal **PWM3** may control the gate terminal (**G**) of MOSFET **M2** of Fig. 2, a complementary PWM signal with respect to signal **PWM4** may control the gate terminal (**G**) of MOSFET **M4** of Fig. 2, and a complementary PWM signal of signal **PWM5** may control the gate terminal (**G**) of MOSFET **M6** of Fig. 2.

In the example, signals **PWM3, PWM4** and **PWM5** may control each of the switches/MOSFETs to be switched at 3 kHz. This allows each switch/MOSFET to turn ON for a period, according to the duty cycle ratio (which may be changed according to a comparison between a reference voltage and the output voltage **Vout**), where each of the signals **PWM3, PWM4** and **PWM5** may be shifted sequentially by **1/N** (where **N** is the number of series connections of switches/MOSFETs (for example, MOSFETs **M1-M2,** MOSFETs **M3-M4,** MOSFETs **M5-M6**), which in the example shown in Fig. 3 is three (N=3)) of the switching period, such as 1/3 kHz or around 333.33 microseconds. During this time each switch turns ON and OFF. This may effectively increase the effective frequency to 3 times the switching period at the output terminal (e.g., terminal J of Fig. 2) of the power converter circuit **10** or electrical circuit **20** of Figs. 1 and 2, respectively, without actually increasing the switching frequency. However, in embodiments described herein, the MOSFETs may be switched at a much higher rate (e.g., 200 kHz).

Further, the design may be scalable in that the effective frequency can be increased more and more by increasing the number of series connections of switches; the multi-level switching in each series connections of switches allows the switching to increase an effective frequency (e.g., relative to the switching frequency) of the current flowing through the differential filter (e.g., inductor L7 of Fig. 2) without driving a single MOSFET faster. Signals **PWM1** and **PWM2** may be complementary with respect to each other. For example, signal **PWM1** may be applied to control switches **Sa1/Sa3** of Fig. 1 and/or the gate terminals (**g**) of IGBTs **Sc1/Sc3** of Fig. 2. Signal **PWM2** may be applied to control switches **Sa2/Sa4** of Fig. 1 and/or the gate terminals (**g**) of IGBTs **Sc2/Sc4** of Fig. 2.

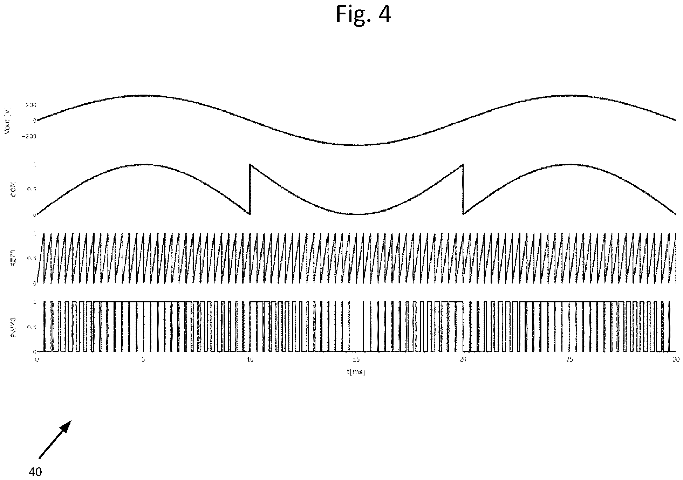

Reference is now made to Fig. 4, which illustrates timelines showing waveforms that describe, according to some aspects of the disclosure, a possible method of generating a pulse width modulation (PWM).

The example shown in Fig.4, illustrates timelines 40 describing a possible method of generating a pulse width modulation (PWM) signal **PWM3** of Fig. 3.

The upper graph shows a waveform, in volts (V) versus time, for output voltage **Vout.** Output voltage **Vout** may be any one of AC output voltages Vout1, Vout2, and Vout3 of Fig. 2, with respect to a reference voltage (e.g., node **E,** neutral potential terminal, an earth potential terminal) and equivalent with **Vout** shown in Fig. 3. Output voltage **Vout** may be the output power of power converter circuit **10** and electrical circuit **20** of Figs. 1 and 2, respectively. In some aspects, **Vout** may be filtered by a filter circuit comprising a capacitor to generate a substantially AC sinusoidal voltage waveform at the output of the filter circuit. In the example shown in Fig. 4, output voltage **Vout** may be a 50Hz sine-waveform of 230V_{RMS}.

The second graph from the top of Fig. 4 may represent a reference signal COM corresponding to (e.g., related to) output voltage **Vout.** During the positive half of the sine-wave **Vout,** reference signal **COM** may be similar to output voltage **Vout** (e.g., a sine wave with substantially the same frequency but with a different amplitude). During the negative half of the sine-wave **Vout,** reference signal **COM** may be complementary to output voltage **Vout.** For example, reference signal **COM** may be equivalent with **1-(Vout/Vamp),** where **Vamp** is the peak amplitude of sine-wave **Vout.**

The third graph from the top of Fig. 4 may represent another reference signal REF3 used to compare with the reference signal **COM.** In some aspects, **REF3** may be a saw tooth wave (or saw wave). In the example, the saw tooth wave **REF3** may have a frequency of 3 kHz.

The lower graph shows PWM control signal **PWM3** used to control a switch(s) of the power converter circuit. For example, signal **PWM3** may control switch **Sb1** of Fig. 1 and/or the gate terminal (**G**) of MOSFET **M1** of Fig. 2 and may be equivalent with control signal **PWM3** of Fig. 3. Control signal **PWM3** may be generated by digital encoding component(s) (e.g., a microprocessor) and/or analog circuit(s) (e.g., using a comparator, oscillator, etc.). In this example control signal **PWM3** may be generated by a comparator receiving reference signals **COM** and **REF3** as inputs. Where reference signal **COM** is larger than reference signal **REF3,** control signal **PWM3** may be '1' indicating an 'ON' state. Where reference signal **COM** is smaller than reference signal **REF3,** control signal **PWM3** may be '0' indicating an 'OFF' state.

The PWM control signal **PWM3** may be generated by digital encoding component(s) (e.g., a microprocessor) and/or analog circuit(s) (e.g., using a comparator, oscillator, etc.). For example, PWM control signal **PWM3** signals may be generated by controller **80** of Fig. 1 or a similar one.

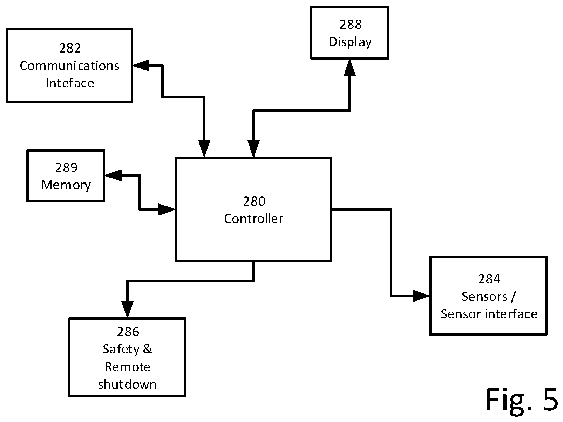

Reference is now made to Fig. 5, which illustrates a block diagram of a controller according to aspects of the disclosure herein. Controller **80** of Fig. 1 and/or controller **180** of Fig. 2 may be implemented with controller **280.** A controller **280** may include at least one of a microprocessor, microcontroller, digital signal processor (DSP), or the like. Controller **280** may be connected to a memory **289.** Controller **280** may serve as a central controller to other similar controllers as controller **280** which may be included to control multiple interconnected power converter circuits (e.g., a plurality of power converter circuits **10** for example). Communications interface **282** connected to controller **280** may provide communications between controller **280** and other controllers (and other communication interfaces) included generally in a power system, which includes power converter circuit 10. The communications to and from communications interface **282** may be based on a control algorithm running on controller **280.** The communications may include control signals provided on control lines which operably connect to and control power converter circuit **10.** For example, controller **280** may generate control signals to control the switches of power converter circuit **10** of Fig. 1 **(Sal, Sa2, Sa3, Sa4, Sb1, Sb2, Sb3, Sb4, Sb5, Sb6...Sb_{(2N-1)}**, **Sb_{2N}**) and/or the IGBTs and MOSFETs of power converter circuit **10** of Fig. 1 (IGBTs **Sc1, Sc2, Sc3** and **Sc4** and MOSFETs **M1, M2, M3, M4, M5** and **M6**).

Communications through communications interface **282** may also include measured and/or sensed parameters via sensors/ sensor interface **284** that, for example, may be included in power converter circuit **10** of Fig. 1. The communications by communications interface **282** may be conveyed using WiFi, power line communications (PLC), near field communications or a RS232/485 communication bus, for example. Communications interface **282** may communicate with a local area network or cellular network in order to establish an internet connection. For example, the internet connection may provide a feature of remote monitoring or reconfiguration of power converter circuit **10.**

A display **288** connected to central controller **280** may be mounted on the surface of the housing used to house power converter circuit **10** for example. Display **288** may display for example the power produced from power converter circuit **10.** Controller **280** may be connected to a shutdown device **286** (e.g., a safety and remote shutdown device). Sensing by sensor(s) / sensor interface **284** as well as sensed parameters communicated between controller **280** and sensor(s) / sensor interfaces of power converter circuit **10** may be indicative of a fault condition (e.g., overvoltage, overcurrent, ground fault, failure of components, input power or load disconnection). Upon detection of the fault condition, shutdown device **286** may be activated in order to isolate the fault condition and/or shutdown power converter circuit **10.** For example, in such a case, controller **180** of Fig. 2 may turn OFF relays **R1, R2** and **R3.**

Control signals from controller **280** applied to the switches of power converter circuit **10** of Fig. 1 (**Sa1**, **Sa2, Sa3, Sa4, Sb1, Sb2, Sb3, Sb4, Sb5, Sb6...Sb_{(2N-1)}**, **Sb_{2N}**) and/or the IGBTs and MOSFETs of electrical circuit **20** of Fig. 2 (IGBTs **Sc1, Sc2, Sc3** and **Sc4** and MOSFETs **M1**, **M2, M3, M4, M5** and **M6**) are generated using a modulation scheme. The modulation scheme may be responsive to the electrical parameters sensed in power converter circuit **10** when power converter circuit **10** may or might not be connected to a load. The load may be an AC motor or a utility grid supply for example. The modulation scheme may include pulse width modulation (PWM), frequency modulation (FM), or a variable frequency plus variable pulse width modulation, for example. An algorithm of controller **280** may allow application of control signals. The control signals may be applied responsive to a sensing step of an algorithm to sense the electrical parameters in power converter circuit **10** connected to a load and/or when power converter circuit **10** is not connected to a load. For example, sensor(s) / sensor interface **284** may sense/measure the current flowing through the output legs/mutually coupled inductors **L4, L5, L6.** The load may be a utility grid, for example.

In some aspects of the disclosure herein, controller 280 of Fig. 5 may be implemented as an independent circuit or component. The implementation may be digital (e.g. using a microprocessor), analog (e.g. using an integrator), or both (e.g., using a digital-analog converter).

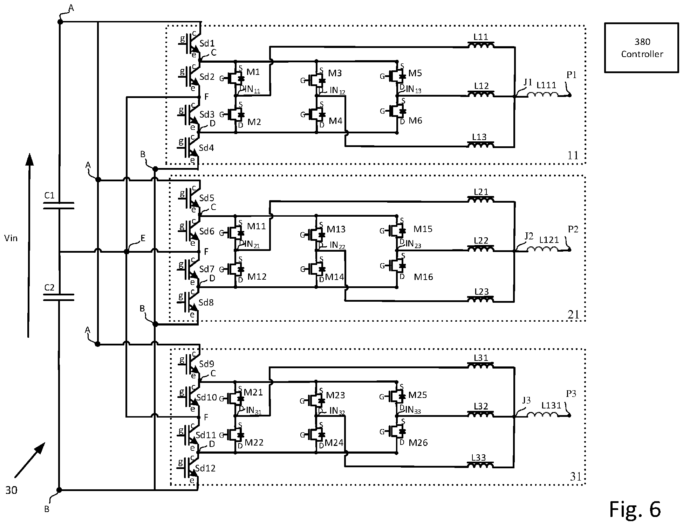

Reference is made to Fig. 6, which illustrates a circuit diagram of a power converter circuit **30** according to illustrative aspects of the disclosure. Fig. 6 provides an example of a multi-level inverter circuit topology. Thus, in the example embodiment of Fig. 6, the power converter circuit **30** is an example of a three-phase multilevel inverter. A direct current (DC) input voltage **Vin** may be applied across input terminals **A** and **B.** Input voltage **Vin** may be a DC voltage received from a DC power source, e.g. a battery, a photovoltaic panel, a rectified source of alternating current (AC) from an AC generator, etc.

A series connection of capacitors **C1** and **C2** may be connected across input terminals **A** and **B.** In some aspects, capacitors **C1** and **C2** may be replaced by a plurality of series and/or parallel connected capacitors. Node **E** may be the point of connection between capacitors **C1** and **C2** (e.g., intermediate node). Node **E** may be coupled to neutral and/or earth potential.

In some aspects, power converter circuit **30** may comprise a plurality of single-phase power converter circuits. Thus, in the example embodiment of Fig. 6, the power converter circuit **30** comprises three single-phase converter circuits 11, 21 and 31. In the example embodiment of Fig. 6, each of single-phase converter circuits 11, 21 and 31 are similar to power converter circuit **10** of Fig. 1. Each of the single-phase converter circuits 11, 21 and 31 may be connected across input terminals **A** and **B** and configured to receive direct current input voltage **Vᵢₙ**. Each of the single-phase converter circuits 11, 21 and 31 may be connected to node **E.** Each of the single-phase converter circuits 11, 21 and 31 may be configured to convert direct current input voltage **Vᵢₙ** to an alternating current.

Power converter circuit 11 may comprise: a series connection of switches **Sd1, Sd2, Sd3** and **Sd4** (e.g., similar to switches **Sa1**, **Sa2, Sa3** and **Sa4** of Fig. 1) that may also be connected across input terminals **A** and **B,** and a plurality of series connections of switches **M1**, **M2, M3, M4, M5** and **M6** (e.g., similar to switches **Sb1, Sb2, Sb3, Sb4, Sb5** and **Sb6** of Fig. 1) that may be connected across nodes **C** and **D.** In the example embodiment of Fig. 6, switches **Sd1, Sd2, Sd3** and **Sd4** may be insulated gate bipolar transistors (IGBTs) and switches **M1**, **M2, M3, M4, M5** and **M6** may be MOSFETs (e.g., similar to Fig. 2). Each series connection of switches **M1**, **M2, M3, M4, M5** and **M6** may comprise an intermediate node; the series connection of switches **M1-M2** may comprise intermediate node **IN₁₁,** the series connection of switches **M3-M4** may comprise intermediate node **IN₁₂,** and the series connection of switches **M5-M6** may comprise intermediate node **IN₁₃.** Within power converter circuit 11, a corresponding first terminal of inductors **L11, L12,** and **L13** may be coupled to node **J1** (e.g., an output terminal) and a corresponding second terminal of inductors **L11, L12,** and **L13** may be coupled respectively to terminals **IN₁₁, IN₁₂,** and **IN₁₃.** Terminal **J1** may combine the voltages of the output legs. In some aspects, terminal **J1** may be an output terminal of power converter circuit **11** that may output an AC sine wave (e.g., with DC offset). For example, terminal **J1** may be an output terminal of one phase in a single-phase / three-phase / multi-phase converter. Inductors **L11, L12,** and **L13** may be mutually coupled together. Inductors **L11, L12,** and **L13** may be utilized to smooth a sine-wave of an AC output of power converter circuit **11.** In some embodiments, inductor **L111** (e.g., differential filter) may be coupled/connected between terminal **J1** and terminal **P1.** In such embodiment, terminal **P1** may be an output terminal of one phase in a single-phase / three-phase / multi-phase converter. In some aspects, a capacitor may be coupled between terminal **J1** and a reference terminal (e.g., node **E**).

Power converter circuit **21** may comprise: a series connection of switches **Sd5, Sd6, Sd7** and **Sd8** (e.g., similar to switches **Sa1**, **Sa2, Sa3** and **Sa4** of Fig. 1) that may also be connected across input terminals **A** and **B,** and a plurality of series connections of switches **M11, M12, M13, M14, M15** and **M16** (e.g., similar to switches **Sb1, Sb2, Sb3, Sb4, Sb5** and **Sb6** of Fig. 1) that may be connected across nodes **C** and **D.** In the example embodiment of Fig. 6, switches **Sd5, Sd6, Sd7** and **Sd8** may be insulated gate bipolar transistors (IGBTs) and switches **M11, M12, M13, M14, M15** and **M16** may be MOSFETs (e.g., similar to Fig. 2). Each series connection of switches **M11, M12, M13, M14, M15** and **M16** may comprise an intermediate node; the series connection of switches **M11-M12** may comprise intermediate node **IN₂₁,** the series connection of switches **M13-M14** may comprise intermediate node **IN₂₂,** and the series connection of switches **M15-M16** may comprise intermediate node **IN₂₃**. Within power converter circuit **21,** a corresponding first terminal of inductors **L21, L22,** and **L23** may be coupled to node **J2** (e.g., an output terminal) and a corresponding second terminal of inductors **L21, L22,** and **L23** may be coupled respectively to terminals **IN₂₁, IN₂₂,** and **IN₂₃.** Terminal **J2** may combine the voltages of the output legs. In some aspects, terminal **J2** may be an output terminal of power converter circuit **21** that may output an AC sine wave (e.g., with DC offset). For example, terminal **J2** may be an output terminal of one phase in a single-phase / three-phase / multi-phase converter. Inductors **L21, L22,** and **L23** may be mutually coupled together. Inductors **L21, L22,** and **L23** may be utilized to smooth a sine-wave of an AC output of power converter circuit **21.** In some embodiments, inductor **L121** (e.g., differential filter) may be coupled/connected between terminal **J2** and terminal **P2.** In such embodiment, terminal **P2** may be an output terminal of one phase in a single-phase / three-phase / multi-phase converter. In some aspects, a capacitor may be coupled between terminal **J2** and a reference terminal (e.g., node **E**).

Power converter circuit **31** may comprise: a series connection of switches **Sd9, Sd10, Sd11** and **Sd12** (e.g., similar to switches **Sa1**, **Sa2, Sa3** and **Sa4** of Fig. 1) that may also be connected across input terminals **A** and **B,** and a plurality of series connections of switches **M21, M22, M23, M24, M25** and **M26** (e.g., similar to switches **Sb1, Sb2, Sb3, Sb4, Sb5** and **Sb6** of Fig. 1) that may be connected across nodes **C** and **D.** In the example embodiment of Fig. 6, switches **Sd9, Sd10, Sd11** and **Sd12** may be insulated gate bipolar transistors (IGBTs) and switches **M21, M22, M23, M24, M25** and **M26** may be MOSFETs (e.g., similar to Fig. 2). Each series connection of switches **M21, M22, M23, M24, M25** and **M26** may comprise an intermediate node; the series connection of switches **M21-M22** may comprise intermediate node **IN₃₁,** the series connection of switches **M23-M24** may comprise intermediate node **IN₃₂,** and the series connection of switches **M25-M26** may comprise intermediate node **IN₃₃.** Within power converter circuit **31,** a corresponding first terminal of inductors **L31, L32,** and **L33** may be coupled to node **J3** (e.g., an output terminal) and a corresponding second terminal of inductors **L31, L32,** and **L33** may be coupled respectively to terminals **IN₃₁, IN₃₂,** and **IN₃₃.** Terminal **J3** may combine the voltages of the output legs. In some aspects, terminal **J3** may be an output terminal of power converter circuit **31** that may output an AC sine wave (e.g., with DC offset). For example, terminal **J3** may be an output terminal of one phase in a single-phase / three-phase / multi-phase converter. Inductors **L31, L32,** and **L33** may be mutually coupled together. Inductors **L31, L32,** and **L33** may be utilized to smooth a sine-wave of an AC output of power converter circuit **31.** In some embodiments, inductor **L131** (e.g., differential filter) may be coupled/connected between terminal **J3** and terminal **P3.** In such embodiment, terminal **P3** may be an output terminal of one phase in a single-phase / three-phase / multi-phase converter. In some aspects, a capacitor may be coupled between terminal **J3** and a reference terminal (e.g., node **E**).

Controller 380 may be: a digital signal processing (DSP) circuit, a field programmable gate array (FPGA) device, etc. Controller 380 may control power converter circuit **30** and its components (for example, switches, voltages, etc.) based on a predetermined algorithm, a measured parameter (e.g., a measurement collected by one or more sensors), a calculated parameter, determined or estimated (e.g., based on one or more measured parameters) parameter, any other appropriate data, etc. As an example, the electrical parameter may be: current, voltage, power, frequency, etc. In some aspects, controller 380 may comprise sensors to measure or sense one or more electrical parameters.

Controller **380** may control switches **Sd1, Sd2, Sd3, Sd4, Sd5, Sd6, Sd7, Sd8, Sd9, Sd10, Sd11, Sd12, M1, M2, M3, M4, M5, M6, M11, M12, M13, M14, M15, M16, M21, M22, M23, M24, M25** and **M26.** The switches **M1, M2, M3, M4, M5, M6, M11, M12, M13, M14, M15, M16, M21, M22, M23, M24, M25** and **M26** may be insulated gate bipolar transistors (IGBTs), metal oxide semiconductor field effect transistors (MOSFETs), bipolar junction transistors (BJTs), filed effect transistors (FETs), as silicone-controlled rectifiers (SCRs) or any known solid-state switch, or any combination of these components.

Switches **Sd1, Sd2, Sd3, Sd4, Sd5, Sd6, Sd7, Sd8, Sd9, Sd10, Sd11,** and **Sd12** may be switched at a first frequency. The first frequency may be the output frequency (e.g., grid frequency, load frequency, utility frequency, (power) line frequency, 50Hz-60Hz, etc.). Each switch in each pair of switches **Sd1+Sd3, Sd2+Sd4, Sd5+Sd7, Sd6+Sd8, Sd9+Sd11, Sd10+Sd12,** may be closed/turned ON/conducting substantially at the same time, and may be open/turned OFF/non-conducting substantially at the same time. Each pair of the pairs of switches **Sd1+Sd3, Sd5+Sd7,** and **Sd9+Sd11** may be switched at the same time and in a complementary manner with regard to the pairs of switches **Sd2+Sd4, Sd6+Sd8,** and **Sd10+Sd12** respectively (e.g., when pair of switches **Sd1+Sd3** are closed, the pair of switches **Sd2+Sd4** may be open).

The pairs of switches **Sd1+Sd3** and **Sd2+Sd4** may be switched in a 120° phase (of the first frequency) with respect to pairs of switches **Sd5+Sd7** and **Sd6+Sd8,** and may be switched in a 240° phase (of the first frequency) with respect to pairs of switches **Sd9+Sd11** and **Sd10+Sd12.**

Switches **M1**, **M2, M3, M4, M5, M6, M11, M12, M13, M14, M15, M16, M21, M22, M23, M24, M25** and **M26** may be switched at a second frequency. The second frequency may be higher than the first frequency. Each switch of switches **M1**, **M3, M5, M11, M13, M15, M21, M23,** and **M25** may be switched in a complementary manner with regard to switch **M2, M4, M6, M12, M14, M16, M22, M24,** and **M26** respectively. For example, switch **M1** may be closed/turned ON/conducting when switch **M2** is open/turned OFF/non-conducting, and switch **M1** may be open/turned OFF/non-conducting when switch **M2** is closed/turned ON/conducting.

For generalization, in a power converter circuit comprising a plurality of **N** series connections of two or more switches, each group (e.g., pair) of series-connected switches (e.g., where **M1-M2** is the first pair, **M3-M4** is the second pair, **M5-M6** is the third pair... and **M_{(2N-1)}-M_{2N}** is the n^{th} pair) is shifted sequentially by **1/N** (where **N** is the number of series connections) of the switching period of the second frequency with respect to the other groups (e.g., pairs) of series-connected switches. For example, power converter circuits 11, 21 and 31 comprise three (N=3) series connections of switches, thus each series connection of switches may be switched with phase-shift of 120°.

In some aspects, each group (e.g., pair) of the groups (e.g., pairs) of series-connected switches of all power converter circuits may be shifted sequentially by **1/(P*N)** (where **P** is the number of parallel connected power converters) of the switching period of the second frequency with respect to the other groups (e.g., pairs) of series-connected switches.

For example, in Fig.6 where P=N=3, the switches **M1**, **M2, M3, M4, M5, M6, M11, M12, M13, M14, M15, M16, M21, M22, M23, M24, M25** and **M26** may be switched according to following sequential phase-shifting of the second frequency (e.g., higher-frequency):

| **Pair of switches** | M1-M2 | M3-M4 | M5-M6 | M11-M12 | M13-M14 | M15-M16 | M21-M22 | M23-M24 | M25-M26 |
|---|---|---|---|---|---|---|---|---|---|
| **Phase-shift** | 0° | 120° | 240° | 40° | 160° | 280° | 80° | 200° | 320° |

The phase shifting between each pair of the pairs of series-connected switches of all single-phase power converter circuits (e.g., single-phase converter circuits 11, 21, and 31) may enable a power converter (e.g., power converter circuit 30) to achieve lower ripple input current and lower voltage fluctuations over the input capacitance (e.g., capacitors C1 and C2 of Fig. 1, 2 and 6).

In some aspects, the sequential phase shifting at the second frequency of the switches may reduce the temporary and mean (e.g., average) input current drawn by the power converter circuit (for example, power converter circuit **30**) according to illustrative aspects of the disclosure. Thus, the ripple voltage across the bulk/input capacitors (e.g., capacitors **C1** and **C2**) may be reduced. The reduction of ripple voltage and/or current flowing through the bulk/input capacitors may reduce the cost and size of a power converter circuit.

Switches **M1**, **M2, M3, M4, M5, M6, M11, M12, M13, M14, M15, M16, M21, M22, M23, M24, M25** and **M26** may be switched according to the duty cycle ratio, which may be changed according to a comparison between a reference voltage and the output voltage at output terminals **P1, P2** and **P3.** In some aspects, the reference voltage of the switches of series connection of switches (e.g., **Sd1, Sd2, Sd3,** and **Sd4**) may be similar to the reference voltage of the switches of the same power converter circuit (e.g., switches **M1**, **M2, M3, M4, M5,** and **M6**). An example for the timing shown in Figs. 3-4 may be an example of the desired duty cycles, but a variety of different timings may be used that may have similar or different switching performance.

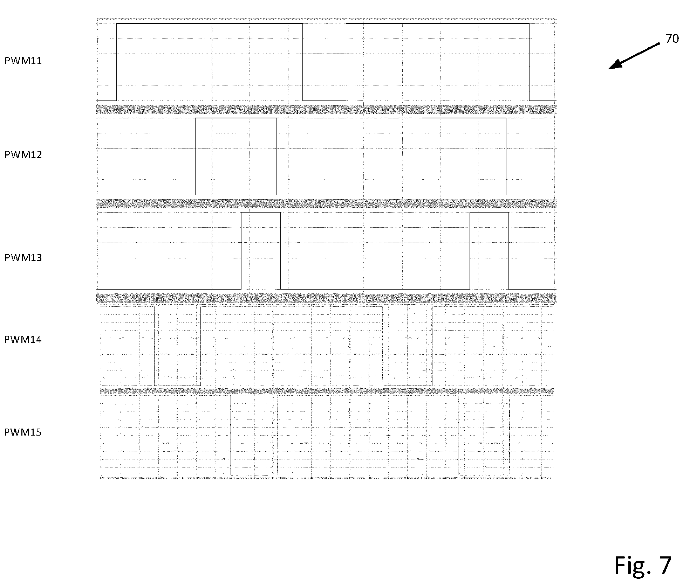

Reference is made to Fig. 7, which illustrates timelines **70** showing waveforms that describe, according to some aspects of the disclosure, a possible control method of a power converter circuit (e.g., power converter circuit **30** comprising three single-phase converter circuits **11, 21** and **31**). The timelines show waveforms, in volts (V) versus time, and illustrate an example for possible control signals. A different graph is provided for each of the control signals **PWM11, PWM12, PWM13, PWM14** and **PWM15** used to control switches of the power converter circuit. The **PWM11, PWM12, PWM13, PWM14** and **PWM15** control signals may be generated by digital encoding component(s) (e.g., a microprocessor, general processor, etc.) and/or analog circuit(s) (e.g., using a comparator, oscillator, etc.). For example, **PWM11, PWM12, PWM13, PWM14** and **PWM15** control signals may be generated by controller 380 of Fig. 6.

In the example shown in Fig. 7, control signals **PWM11, PWM12, PWM13, PWM14** and **PWM15** may be generated at the second frequency of Fig. 6, which is relatively higher than the first frequency, the switching frequency of the switches of the series connection of switches (e.g., switches **Sd1, Sd2, Sd3** and **Sd4** of Fig. 6), and the frequency of the output voltage at output terminals **P1, P2** and **P3,** e.g., 50Hz. Control signals **PWM11, PWM12, PWM13, PWM14** and **PWM15** may be varied according to the duty cycle ratio, which may be changed according to a comparison between a reference voltage and the output voltage at output terminals **P1, P2** and **P3.**

Control signals **PWM11, PWM14** and **PWM15** may control switches of different series connections in a power converter, where all series connections may be connected in parallel with respect to each other. For example, control signals **PWM11, PWM14** and **PWM15** may control the gate terminal (**G**) of MOSFETs **M1**, **M3** and **M5** of power converter circuit 11 in Fig. 6, respectively (or **M11, M13** and **M15** of power converter circuit 21 in Fig. 6, respectively, or M21, M23 and M25 of power converter circuit 31 in Fig. 6, respectively). For instance, control signals **PWM11, PWM14** and **PWM15** may be similar to control signals **PWM3, PWM4** and **PWM5** of Fig. 3.

Control signals **PWM11, PWM14** and **PWM15** may be shifted sequentially by **1/(P)** (where **P** is the number of parallel connected single-phase power converters) of the switching period of the second frequency with respect to each other. For example, in Fig. 6, where P=3, control signals **PWM11, PWM14** and **PWM15** may be shifted sequentially by 120°.

Control signals **PWM11, PWM14** and **PWM15** may be varied according to a common duty cycle ratio, which may be changed according to a comparison between a common reference voltage and the output voltage at the output terminal of the single-phase power converter (e.g., terminal P1 of single-phase power converter 11).

In some aspects, controller **380** of Fig. 6 may generate complementary PWM control signals with respect to PWM control signals **PWM11, PWM14** and **PWM15.** The complementary PWM control signals may control the corresponding and complementary switch(es) to the series connection. For example, complementary PWM control signals with respect to PWM control signals **PWM11, PWM14** and **PWM15** may control the gate terminal (**G**) of MOSFETs **M2, M4** and **M6** of Fig. 6, respectively.

Control signals **PWM11, PWM12** and **PWM13** may control each of the switches of different parallel-connected power converters. Following the above example, where control signal **PWM11** controls the gate terminal (**G**) of MOSFET **M1** of power converter circuit 11 in Fig. 6, control signals **PWM12** and **PWM13** may control the gate terminal (**G**) of MOSFETs **M11** and **M21** of power converters 21 and 31 in Fig. 6, respectively.

Control signals **PWM11, PWM12** and **PWM13** may be shifted sequentially by **1/(P*N)** (where **P** is the number of parallel connected power converters, and **N** is the number of parallel series connections in each power converter) of the switching period of the second frequency with respect to each other. For example, in Fig. 6, where P=N=3, control signals **PWM11, PWM12** and **PWM13** may be shifted sequentially by 40°.

Control signals **PWM11, PWM12** and **PWM13** may be varied according to a different duty cycle ratio, which may be changed according to a comparison between a common reference voltage and the output voltage at the output terminal of the corresponding single-phase power converter. For example, the duty cycle ratio of control signal **PWM11** may be changed according to a comparison between a common reference voltage and the output voltage at terminal **P1** of single-phase power converter **11.** The duty cycle ratio of control signal **PWM12** and **PWM13** may be changed according to a comparison between a common reference voltage and the output voltage at terminal **P2** of single-phase power converter **21** and **P3** of single-phase power converter **31,** respectively. The output voltages at each of terminals **P1, P2** and **P3** may be phase shifted by 120°, thus, the duty-cycle of each of control signals **PWM11, PWM12** and **PWM13** may vary.

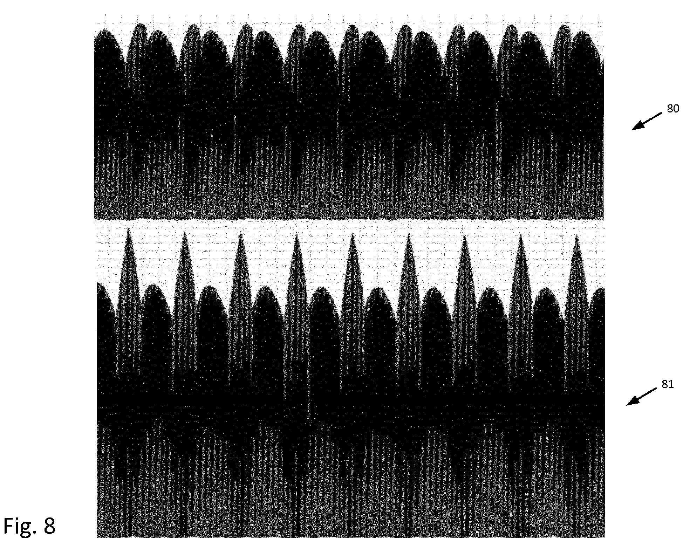

Reference is made to Fig. 8, which illustrates timelines **80** and **81** showing waveforms that describe, according to some aspects of the disclosure, a current flowing through the bulk/input capacitors of a power converter circuit (e.g., capacitors **C1** and **C2** of Figs. 1, 2 and 6). The timelines show waveforms, in current (A) versus time.

Timeline **80** illustrates a current flowing through the bulk/input capacitors of a 3-phase power converter circuit using sequential phase shifting (for example, as depicted referring to Figs. 6 and 7) with respect to each of the switches (within each phase and between each phase).

Timeline **81** illustrates a current flowing through the bulk/input capacitors of a 3-phase power converter circuit with the same configuration of elements as the power converter circuit of timeline **80.** However, the current shown in timeline **81** illustrates an operation without the sequential phase-shifting at the high-frequency (e.g., second frequency of Figs. 1, 2, 3, 4 and 6) between different single-phase power converters; although a high-frequency phase-shift between different series connections within a single-phase power converter may exist, for example, as shown in Fig. 3.

It can be noted, based on the comparison between the currents illustrated in timelines **80** and **81,** that the sequential phase shifting may achieve lower ripple input current, and, thus, lower voltage fluctuations over the input capacitance (e.g., capacitors C1 and C2 of Figs. 1, 2 and 6).

In some aspects, the sequential phase shifting of the switches may reduce the temporary and mean (e.g., average) input current drawn by the power converter circuit (for example, power converter circuit **30**) according to illustrative aspects of the disclosure. The reduction of ripple voltage and/or current flowing through the bulk/input capacitors may reduce cost and size.

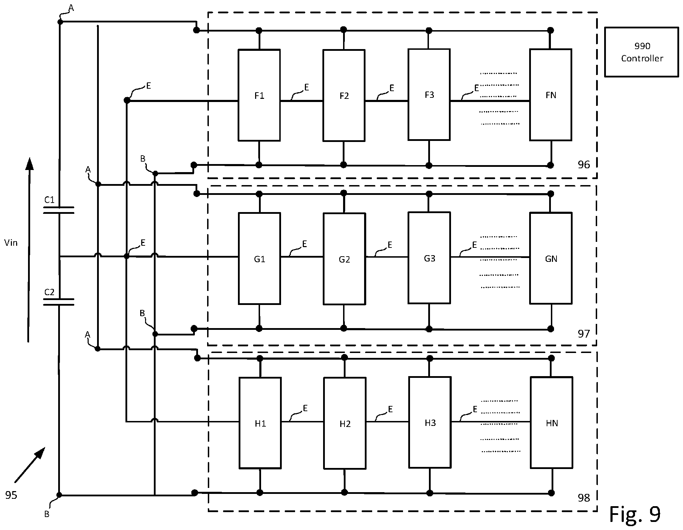

Reference is made to Fig. 9, which illustrates a circuit diagram of a power converter circuit **95** according to illustrative aspects of the disclosure. Fig. 9 provides a generalization of an (e.g., multi-level) inverter circuit topology according to illustrative aspects of the disclosure. In the example embodiment of Fig. 9, the power converter circuit **95** is an example of a three-phase multilevel inverter. A direct current (DC) input voltage **Vin** may be applied across input terminals **A** and **B.** Input voltage **Vin** may be a DC voltage received from a DC power source, e.g. a battery, a photovoltaic panel, a rectified source of alternating current (AC) from an AC generator, etc.

A series connection of capacitors **C1** and **C2** may be connected across input terminals **A** and **B.** In some aspects, capacitors **C1** and **C2** may be replaced by a plurality of series and/or parallel connected capacitors. Node **E** may be the point of connection between capacitors **C1** and **C2** (e.g., intermediate node). Node **E** may be coupled to neutral and/or earth potential.

In some aspects, power converter circuit **95** may comprise a plurality of single-phase power converter circuits. In the example embodiment of Fig. 9, the power converter circuit **95** comprises three single-phase converter circuits 96, 97 and 98. Each of the single-phase converter circuits 96, 97 and 98 may be connected across input terminals **A** and **B** and configured to receive direct current input voltage **Vᵢₙ**. Each of the single-phase converter circuits 96, 97 and 98 may be connected to node **E.** Each of the single-phase converter circuits 96, 97 and 98 may be configured to convert direct current input voltage **Vᵢₙ** to an alternating current at a first frequency.

In the example embodiment of Fig. 9, each of single-phase converter circuits 96, 97 and 98 may comprise a plurality of switches (e.g., switches **Sa1-Sa4** and **Sb1-Sb_{2N}** of power converter circuit **10** of Fig. 1). The plurality of switches may be coupled in different configurations, for example according to the following topologies: neutral-point clamped (NPC), T-type neutral-point clamped (TNPC), active neutral-point clamped (ANPC), half-bridge (HB), flying-capacitor (FC), etc. The switches may be insulated gate bipolar transistors (IGBTs), metal oxide semiconductor field effect transistors (MOSFETs), bipolar junction transistors (BJTs), field effect transistors (FETs), silicone-controlled rectifiers (SCRs) or any known solid-state switch, or any combination of these components.

Controller 990 may be: a digital signal processing (DSP) circuit, a field programmable gate array (FPGA) device, etc. Controller 990 may control power converter circuits 96, 97 and 98 and their components (for example, switches, voltages, etc.) based on a predetermined algorithm, a measured parameter (e.g., a measurement collected by one or more sensors), a calculated parameter, a determined or estimated (e.g., based on one or more measured parameters) parameter, any other appropriate data, etc. As an example, the electrical parameter may be: current, voltage, power, frequency, etc. In some aspects, controller 990 may comprise sensors to measure or sense one or more electrical parameters.

Power converter circuits 96, 97 and 98 may comprise an inductor or a plurality of inductors coupled to an output terminal. In some aspects, power converter circuits 96, 97 and 98 may output at a corresponding output terminal an AC sine wave (e.g., with DC offset). The inductor may be utilized to smooth a sine-wave of an AC output of a corresponding power converter circuit. In case of a plurality of inductors, the inductors may be mutually coupled together.

Power converter circuit 96 may comprise a plurality of circuits comprising N circuits: **F1, F2, F3...**and **FN.** The plurality of circuits **F1, F2, F3...**and **FN** may be connected across input terminals **A** and **B** and configured to receive direct current input voltage **Vᵢₙ**. Each of the plurality of circuits **F1, F2, F3...** and **FN** may be connected to node **E.**

Power converter circuit 97 may comprise a plurality of circuits comprising N circuits: **G1, G2, G3...**and **GN.** The plurality of circuits **G1, G2, G3**...and **GN** may be connected across input terminals **A** and **B** and configured to receive direct current input voltage **Vᵢₙ**. Each of the plurality of circuits **G1, G2, G3**...and **GN** may be connected to node **E.**

Power converter circuit 98 may comprise a plurality of circuits comprising N circuits: **H1, H2, H3...**and **HN.** The plurality of circuits **H1, H2,** H3...and **HN** may be connected across input terminals **A** and **B** and configured to receive direct current input voltage **Vᵢₙ**. Each of the plurality of circuits **H1, H2, H3...** and **HN** may be connected to node **E.**

Each circuit of the plurality of circuits **F1, F2, F3...** and **FN,** circuits **G1, G2, G3**...and **GN, H1, H2, H3...** and **HN** may comprise a similar configuration of elements (e.g., switches, capacitors, inductors, etc.). The configuration of elements may be according to one or more of the following topologies: neutral-point clamped (NPC), T-type neutral-point clamped (TNPC), active neutral-point clamped (ANPC), half-bridge (HB), flying-capacitor (FC), etc. Controller 990 may control the plurality of circuits **F1, F2, F3...** and **FN,** circuits **G1, G2, G3**...and **GN, H1, H2, H3...** and **HN** at a second frequency corresponding to the selected configuration. In some aspects, the second frequency may be similar to the first frequency.

Each circuit of the plurality of circuits of each power converter circuit (for example each circuit of the plurality of circuits **F1, F2, F3...** and **FN**) may be shifted sequentially by **1/N** (where **N** is the number parallel-connected circuit) of the switching period (of the second frequency) with respect to the other circuits of the plurality of circuits.

The output voltage of power converter circuit 96 may be in a 120° phase with respect to the output voltage of power converter circuit 97, and in a 240° phase (of the first frequency) with respect to output voltage of power converter circuit 98.

For generalization, in an inverter circuit comprising **P** parallel connected power converters (e.g., power converters 96, 97 and 98) generating a sine-wave at a first frequency, where each power converter of the power converters comprises **N** circuits (e.g. **F1, F2, F3...** and **FN**) controlled at a second frequency, each circuit (e.g. **F1, F2, F3...** and FN) may be shifted sequentially by **1/(P*N)** of the switching period of the second frequency with respect to the other circuits of power converters (e.g. circuits **G1, G2, G3...**and **GN, H1, H2, H3...** and **HN**).

For example, power converter circuit (e.g., inverter) 95 comprises three power converter circuits 96, 97 and 98, and thus P=3. Each of the three power converter circuits 96, 97 and 98 comprises four (N=4) series connections of switches, thus controller 990 may control each circuit with phase-shift of 30°, according to following control scheme using a sequential phase-shifting (of the second frequency):

| **Circuits** | F1 | F2 | F3 | F4 | G1 | G2 | G3 | G4 | H1 | H2 | H3 | H4 |
|---|---|---|---|---|---|---|---|---|---|---|---|---|
| **Phase-shift** | 0° | 90° | 180° | 270° | 30° | 120° | 210° | 300° | 60° | 150° | 240° | 330° |

The phase shifting between each circuit of all power converter circuits may enable the power converter circuit 95 to achieve lower ripple input current and lower voltage fluctuations over the input capacitance (e.g., capacitors C1 and C2 of Figs. 1, 2, 6 and 9).

In some aspects, the sequential phase shifting of the switches may reduce the temporary and mean (e.g., average) input current drawn by the power converter circuit (for example, power converter circuit **95)** according to illustrative aspects of the disclosure. Thus, the ripple voltage across the bulk/input capacitors (e.g., capacitors **C1** and **C2**) may be reduced. The reduction of ripple voltage and/or current flowing through the bulk/input capacitors may reduce cost and size.

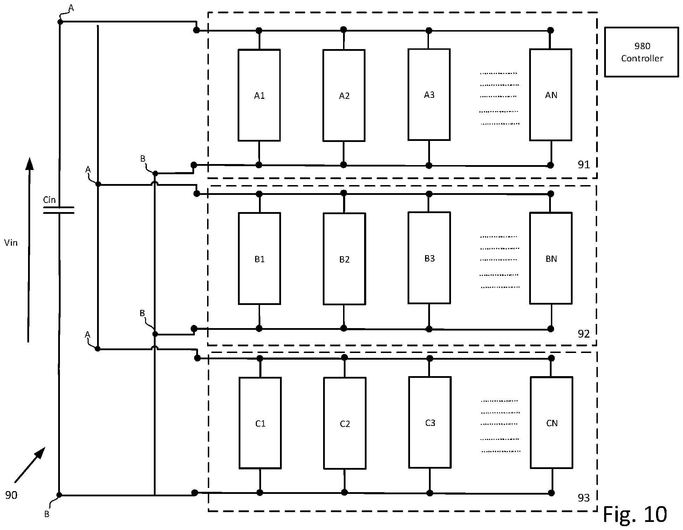

Reference is made to Fig. 10, which illustrates a circuit diagram of a power converter circuit **90** according to illustrative aspects of the disclosure. Fig. 10 provides a generalization of an (e.g., multi-level) inverter circuit topology according to illustrative aspects of the disclosure. Fig. 10 may be an example of circuit 95 of Fig. 9, according to aspects of the disclosure. As shown in Fig. 10, in some aspects of the disclosure, the circuits of each power converter circuit might not be coupled to the middle point of connection between capacitors **C1** and **C2** (e.g., intermediate node). Thus, in Fig. 10, the input capacitance is shown by a single capacitor **Cin,** which may comprise a capacitor or a plurality of capacitors.

In some aspects, power converter circuit **90** may comprise a plurality of single-phase power converter circuits. In the example embodiment of Fig. 9, the power converter circuit **90** comprises three single-phase converter circuits 96, 97 and 98. Each of the single-phase converter circuits 91, 92 and 93 may be connected across input terminals **A** and **B** and configured to receive direct current input voltage **Vᵢₙ**. Each of the single-phase converter circuits 91, 92 and 93 may be configured to convert direct current input voltage **Vᵢₙ** to an alternating current at a first frequency.

In the example embodiment of Fig. 10, each of single-phase converter circuits 91, 92 and 93 may comprise a plurality of switches (e.g., switches **Sa1-Sa4** and **Sb1-Sb_{2N}** of power converter circuit **10** of Fig. 1). The plurality of switches may be coupled in different configurations, for example according to the following topologies: neutral-point clamped (NPC), T-type neutral-point clamped (TNPC), active neutral-point clamped (ANPC), half-bridge (HB), flying-capacitor (FC), etc. The switches may be insulated gate bipolar transistors (IGBTs), metal oxide semiconductor field effect transistors (MOSFETs), bipolar junction transistors (BJTs), field effect transistors (FETs), silicone-controlled rectifiers (SCRs) or any known solid-state switch, or any combination of these components.

Power converter circuit 91 may comprise a plurality of circuits comprising N circuits: **A1, A2, A3...** and **AN.** The plurality of circuits **A1, A2, A3...** and **AN** may be connected across input terminals **A** and **B** and configured to receive direct current input voltage **Vᵢₙ**.

Power converter circuit 92 may comprise a plurality of circuits comprising N circuits: **B1, B2, B3...** and **BN.** The plurality of circuits **B1, B2, B3...** and **BN** may be connected across input terminals **A** and **B** and configured to receive direct current input voltage **Vᵢₙ**.

Power converter circuit 93 may comprise a plurality of circuits comprising N circuits: **C1, C2, C3...** and **CN.** The plurality of circuits **C1, C2, C3...** and **CN** may be connected across input terminals **A** and **B** and configured to receive direct current input voltage **Vᵢₙ**.

Controller 980 may be: a digital signal processing (DSP) circuit, a field programmable gate array (FPGA) device, etc. Controller 980 may control power converter circuits 91, 92 and 93 and their components (for example, switches, voltages, etc.) based on a predetermined algorithm, a measured parameter (e.g., a measurement collected by one or more sensors), a calculated parameter, a determined or estimated (e.g., based on one or more measured parameters) parameter, any other appropriate data, etc. As an example, the electrical parameter may be: current, voltage, power, frequency, etc. In some aspects, controller 980 may comprise sensors to measure or sense one or more electrical parameters (e.g., current, voltage, resistance).

Controller 980 may control each circuit of the power converters (e.g. circuits **A1, A2, A3...** and **AN, B1, B2, B3...** and **BN, B1, B2, B3...** and **BN**) according the control scheme depicted in reference to Fig. 9 and controller 990.

For generalization, in an inverter circuit comprising **P** parallel connected power converters (e.g., power converters 91, 92 and 93) generating a sine-wave at a first frequency, where each power converter of the power converters comprises **N** circuits (e.g. **A1, A2, A3...** and **AN**) controlled at a second frequency, each circuit (e.g. **A1, A2, A3...** and **AN**) may be shifted sequentially by **1/(P*N)** of the switching period of the second frequency with respect to the other circuits of power converters (e.g. circuits **B1, B2,** B3... and **BN, C1, C2, C3**...and **CN**).

For example, inverter 90 comprises three power converter circuits 91, 92 and 93, thus P=3. Each of the three power converter circuits 91, 92 and 93 comprises four (N=4) series connections of switches, thus controller 980 may control each circuit with phase-shift of 30°, according to following control scheme using a sequential phase-shifting (of the second frequency):

| **Circuits** | A1 | A2 | A3 | A4 | B1 | B2 | B3 | B4 | C1 | C2 | C3 | C4 |
|---|---|---|---|---|---|---|---|---|---|---|---|---|
| **Phase-shift** | 0° | 90° | 180° | 270° | 30° | 120° | 210° | 300° | 60° | 150° | 240° | 330° |

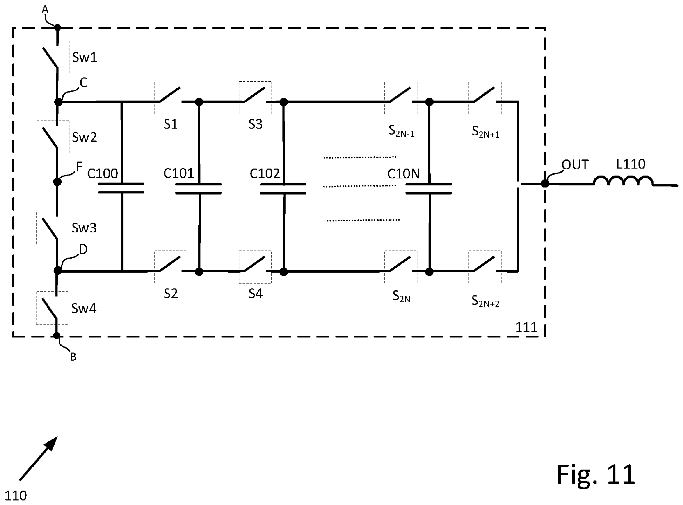

Reference is made to Fig. 11, which illustrates a circuit diagram of an electrical circuit (e.g., power converter) **110.** Electrical circuit **110** comprises circuit **111,** which may be an example of each of circuits **A1, A2, A3...** and **AN, B1, B2, B3...** and **BN,** and **C1, C2, C3...** and **CN** of Fig. 10, according to aspects of the disclosure. In some aspects, circuit **111** may be a flying-capacitor converter or ANPC with flying-capacitors.

Circuit **110** includes electrical circuit (e.g., power converter) **111** and output inductor **L1.** Circuit **111** includes: a first plurality of switches **Sw1, Sw2, Sw3** and **Sw4,** a second plurality of switches **S1, S2, S3, S4... S_{2N-1}, S_{2N}, S_{2N+1}** and **S_{2N+2},** and a plurality of capacitors **C100, C101, C102...** and **C10N.**

Electrical circuit **111** may be connected across input terminals **A** and **B.** (e.g., similar to input terminals **A** and **B** of Fig. 10). Electrical circuit **111** may convert the input direct-current (e.g., DC) voltage across input terminals **A** and **B** to an output alternating-current (e.g., AC) voltage at terminal **OUT.** Output inductor **L110** may be connected to terminal **OUT.**

The first plurality of switches may be connected across input terminals **A** and **B.** A first terminal of switch **Sw1** may be coupled to input terminal **A** and a second terminal of switch **Sw1** may be coupled to node **C.** A first terminal of switch **Sw2** may be coupled to node **C** and a second terminal of switch **Sw2** may be coupled to node **F.** A first terminal of switch **Sw3** may be coupled to node **F** and a second terminal of switch **Sw3** may be coupled to node **D.** A first terminal of switch **Sw4** may be coupled to node **D** and a second terminal of switch **Sw4** may be coupled to input terminal **B.**

The second plurality of switches **S1, S2, S3, S4... S_{2N-1}, S_{2N}, S_{2N+1}** and **S_{2N+2}** may comprise pairs of switches **S1-S2, S3-S4... S_{2N-1}-S_{2N},** and **S_{2N+1}-S_{2N+2}.** Capacitor **C100** (or a plurality of capacitors) may be coupled to node **C** and node **D,** and between pairs of switches **S1-S2.** Another capacitor (or a plurality of capacitors) may be connected between two pairs of switches. For example, capacitor **C101** may be connected between pairs of switches **S1-S2** and **S3-S4,** capacitor **C102** may be connected between pairs of switches **S5-S6** (not shown), and capacitor **C10N** may be connected between pairs of switches **S_{2N-1}-S_{2N},** and **S_{2N+1}-S_{2N+2}.** Terminal **OUT** may be connected between pair of switches **S_{2N+1}-S_{2N+2}.**

The first plurality of switches may be switched by a controller (e.g., controller 980 of Fig. 10) at a first frequency. The first frequency may be the output frequency of the voltage at terminal **OUT.** Switch **Sw1** may be switched and conduct simultaneously (e.g., at the same time) with switch **Sw3** during the positive half-cycle of the output voltage at terminal **OUT.** Switch **Sw2** may be switched and conduct simultaneously (e.g., at the same time) with switch **Sw4** during the negative half-cycle of the output voltage at terminal **OUT.**

The second plurality of switches may be switched by a controller (e.g., controller 980 of Fig. 10) at a second frequency and according to a duty-cycle ratio of the output voltage at terminal **OUT.** The second frequency may be higher than the first frequency. Each two switches of the same pair of switches, may be switched (e.g., turned ON/conduct) in a complementary manner. For example, during the positive half-cycle of the output voltage at terminal **OUT,** switch **S1** may be switched at a duty-cycle ratio **D** of the output voltage at terminal **OUT,** while switch **S3** may be switched at **1-D.** When switch **S1** is OFF, switch **S3** may be ON, and vice versa. During the negative half-cycle of the output voltage at terminal **OUT,** switch **S3** may be switched at the duty-cycle ratio **D** of the output voltage at terminal **OUT,** while switch **S1** may be switched at **1-D.**

In some aspects of the disclosure, each pair of switches of the second plurality of switches may be shifted sequentially by **1/N** (where **N** is the number of pair of switches of the second plurality) of the switching period of the second frequency.

In a case where circuit **111** is used for each of circuits **A1, A2, A3...** and **AN, B1, B2, B3...** and **BN,** and **C1, C2, C3...** and **CN** of Fig. 10, all output terminals **OUT** of each circuit of the same power converter (e.g., **A1, A2, A3**...and **AN**) may be coupled together, to the same node of the output inductor of the corresponding power converter (for example, output inductor **L110**). In some aspects of the disclosure herein, all output terminals **OUT** of each circuit of the same power converter (e.g., **A1, A2, A3...** and **AN**) may be coupled to mutually coupled inductors (e.g., coupled inductors **L4, L5, L6** of Fig. 2), each of which is connected to an output inductor (e.g., differential filter), similar to output inductor **L7** of Fig. 2.

In some aspects, circuit **111** may function as a single-phase power converter. For example, circuit **111** may replace each of the single-phase converter circuits **91, 92** and **93.**

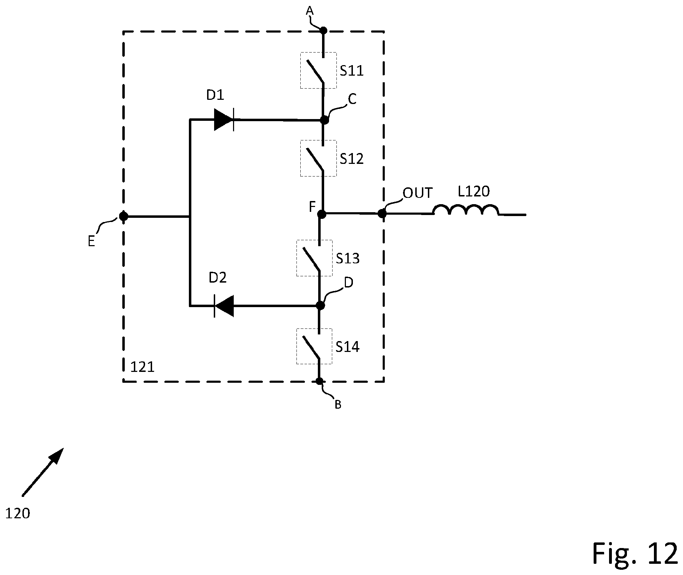

Reference is made to Fig. 12, which illustrates a circuit diagram of an electrical circuit (e.g., power converter) **120.** Electrical circuit **120** comprises circuit **121,** which may be an example of circuits **F1, F2, F3...**and **FN,** circuits **G1, G2, G3...**and **GN, H1, H2, H3...** and **HN** of Fig. 9, according to aspects of the disclosure. In some aspects, circuit **121** may be a neutral-point-clamped (e.g. NPC) converter.

Circuit **120** includes electrical circuit (e.g., power converter) **121** and output inductor **L120.** Circuit **121** includes: a plurality of **S11, S12, S13,** and **S14,** and diodes **D1,** and **D2.**

Electrical circuit **121** may be connected across input terminals **A** and **B.** (e.g., similar to input terminals **A** and **B** of Fig. 10). Electrical circuit **121** may be configured to connect to node **E,** which may be an intermediate node (e.g., the point of connection) between capacitors **C1** and **C2** of Fig. 9. In some embodiments, node **E** may be coupled to neutral and/or earth potential.

Electrical circuit **121** may convert the input direct-current (e.g., DC) voltage across input terminals **A** and **B** to an output alternating-current (e.g., AC) voltage at a first frequency (e.g., 50/60 Hz) at terminal **OUT.** Output inductor **L120** may be connected to terminal **OUT.**

The plurality of switches may be connected across input terminals **A** and **B.** A first terminal of switch **S11** may be coupled to input terminal **A** and a second terminal of switch **S11** may be coupled to node **C.** A first terminal of switch **S12** may be coupled to node **C** and a second terminal of switch **S12** may be coupled to node **F.** A first terminal of switch **S13** may be coupled to node **F** and a second terminal of switch **S13** may be coupled to node **D.** A first terminal of switch **S14** may be coupled to node **D** and a second terminal of switch **S14** may be coupled to input terminal **B.**

The anode of the first diode **D1** may be coupled to node **E** and the cathode of the first diode **D1** may be coupled to node **C.** The anode of the second diode **D2** may be coupled to node **D,** and the cathode of the second diode **D2** may be coupled to node **E.**

Switches **S12** and **S13** of the plurality of switches may be switched by a controller (e.g., controller 990 of Fig. 9) at a first frequency. The first frequency may be the output frequency of the voltage at terminal **OUT** of electrical circuit 121 in Fig. 12. Switches **S12** and **S13** may be switched in a complementary manner. For example, during the positive half-cycle of the output voltage at terminal **OUT,** switch **S12** may be ON and switch **S13** may be OFF. During the negative half-cycle of the output voltage at terminal **OUT,** switch **S13** may be ON and switch **S12** may be OFF.

Switches **S11** and **S14** of the plurality of switches may be switched by a controller (e.g., controller 990 of Fig. 9) at a second frequency. The second frequency may be higher than the output frequency of the voltage at terminal **OUT** of electrical circuit 121 in Fig. 12.

During the positive half-cycle of the output voltage at terminal **OUT,** switch **S11** may be switched according to the duty-cycle ratio **D** of the output voltage. During the positive half-cycle of the output voltage at terminal **OUT,** switch **S14** may be turned OFF. Thus, during the positive half-cycle, the first diode D1 may conduct in a complementary manner with respect to switch **S11,** e.g., at **1-D.**

During the negative half-cycle of the output voltage at terminal **OUT,** switch **S14** may be switched according to the duty-cycle ratio **D** of the output voltage. During the negative half-cycle of the output voltage at terminal **OUT,** switch **S11** may be turned OFF. Thus, during the negative half-cycle, the second diode D2 may conduct in a complementary manner with respect to switch **S14,** e.g., at **1-D.**

In a case where circuit **121** is used for each of circuits **F1, F2, F3...** and **FN,** circuits **G1, G2, G3...**and **GN, H1, H2, H3**...and **HN** of Fig. 9, all output terminals **OUT** of each circuit of the same power converter (e.g., **F1, F2, F3...** and **FN** of power converter **96**) may be coupled together, to the same node of the output inductor of the corresponding power converter (for example, output inductor **L120**).

In a case where circuit **121** is used for each of circuits **F1, F2, F3...** and **FN,** circuits **G1, G2, G3...**and **GN, H1, H2, H3**...and **HN** of Fig. 9, each circuit of the same power converter (e.g., **F1, F2, F3...** and **FN** of power converter **96**) may be shifted sequentially by **1/N** (where **N** is the number of circuits in the power converter) of the switching period of the second frequency. In addition, each circuit of each power converter may be shifted sequentially by **1/N*P** (where **P** is the number of single-phase power converters, and **N** is the number of circuits in the power converter) of the switching period of the second frequency.

In some aspects of the disclosure herein, all output terminals **OUT** of each circuit of the same power converter (e.g., **F1, F2, F3...** and **FN** of power converter **96**) may be coupled to mutually coupled inductors (e.g., coupled inductors **L4, L5, L6** of Fig. 2), each of which is connected to an output inductor (e.g., differential filter), similar to output inductor **L7** of Fig. 2.

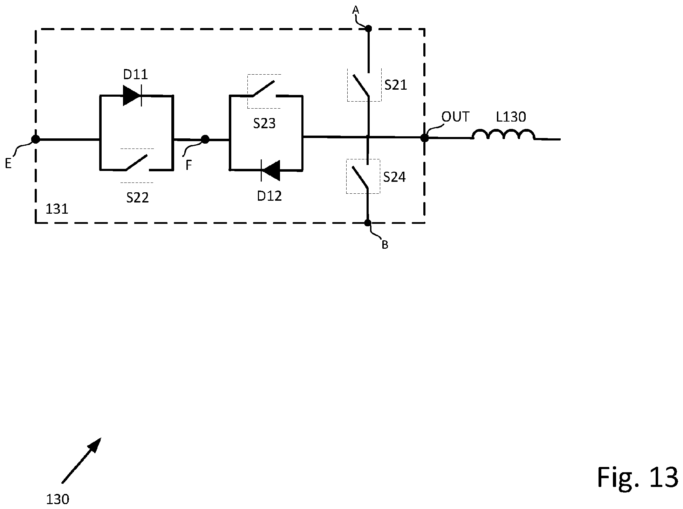

Reference is made to Fig. 13, which illustrates a circuit diagram of an electrical circuit (e.g., power converter) **130.** Electrical circuit **130** comprises circuit **131,** which may be an example of circuits **F1, F2, F3...**and **FN,** circuits **G1, G2, G3...**and **GN, H1, H2, H3...** and **HN** of Fig. 9, according to aspects of the disclosure. In some aspects, circuit **131** may be a T-type neutral-point-clamped (e.g. TNPC) converter.

Circuit **130** includes electrical circuit (e.g., power converter) **131** and output inductor **L130.** Circuit **131** includes: a plurality of switches **S21, S22, S23,** and **S24,** and two diodes **D11** and **D12.**

Electrical circuit **131** may be connected across input terminals **A** and **B.** (e.g., similar to input terminals **A** and **B** of Fig. 10). Electrical circuit **131** may be configured to connect to node **E,** which may be an intermediate node (e.g., the point of connection) between capacitors **C1** and **C2** of Fig. 9. In some embodiments, node **E** may be coupled to neutral and/or earth potential.

Electrical circuit **131** may convert the input direct-current (e.g., DC) voltage across input terminals **A** and **B** to an output alternating-current (e.g., AC) voltage at a first frequency (e.g., 50/60 Hz) at terminal **OUT.** Output inductor **L130** may be connected to terminal **OUT.**

A first terminal of switch **S21** may be coupled to input terminal **A** and a second terminal of switch **S21** may be coupled to terminal **OUT.** A first terminal of switch **S22** may be coupled to node **E** and a second terminal of switch **S22** may be coupled to node **F.** A first terminal of switch **S23** may be coupled to node **F** and a second terminal of switch **S23** may be coupled to terminal **OUT.** A first terminal of switch **S24** may be coupled to terminal **OUT** and a second terminal of switch **S24** may be coupled to input terminal **B.** Diode **D11** may be coupled in parallel with switch **S22,** where the anode of **D11** may be coupled to node **E,** and the cathode of **D11** may be coupled to node **F.** Diode **D12** may be coupled in parallel with switch **S23,** where the anode of **D12** may be coupled to terminal **OUT,** and the cathode of **D12** may be coupled to node **F.**

Switches **S22** and **S23** of the plurality of switches may be switched by a controller (e.g., controller 990 of Fig. 9) at a first frequency. The first frequency may be the output frequency of the voltage at terminal **OUT.** Switches **S22** and **S23** may be switched in a complementary manner. For example, during the positive half-cycle of the output voltage at terminal **OUT,** switch **S23** may be ON and switch **S22** may be OFF. During the negative half-cycle of the output voltage at terminal **OUT,** switch **S22** may be ON and switch **S23** may be OFF.

Switches **S21** and **S24** may be switched by a controller (e.g., controller 990 of Fig. 9) at a second frequency. The second frequency may be higher than the output frequency of the voltage at terminal **OUT.**

During the positive half-cycle of the output voltage at terminal **OUT,** switch **S21** may be switched according to the duty-cycle ratio **D** of the output voltage. During the positive half-cycle of the output voltage at terminal **OUT,** switch **S24** may be turned OFF. Thus, during the positive half-cycle, diode **D11** may conduct in a complementary manner with respect to switch **S21,** e.g., at **1-D.**

During the negative half-cycle of the output voltage at terminal **OUT,** switch **S24** may be switched according to the duty-cycle ratio **D** of the output voltage. During the negative half-cycle of the output voltage at terminal **OUT,** switch **S21** may be turned OFF. Thus, during the negative half-cycle, diode **D12** may conduct in a complementary manner with respect to switch **S24,** e.g., at **1-D.**

In a case where circuit **131** is used for each of circuits **F1, F2, F3...** and **FN,** circuits **G1, G2, G3**...and **GN, H1, H2, H3**...and **HN** of Fig. 9, all output terminals **OUT** of each circuit of the same power converter (e.g., **F1, F2, F3...** and **FN** of power converter **96**) may be coupled together, to the same node of the output inductor of the corresponding power converter (for example, output inductor **L130**).

In a case where circuit **131** is used for each of circuits **F1, F2, F3...** and **FN,** circuits **G1, G2, G3...**and **GN, H1, H2, H3**...and **HN** of Fig. 9, each circuit of the same power converter (e.g., **F1, F2, F3...** and **FN** of power converter **96**) may be shifted sequentially by **1/N** (where **N** is the number of circuits in the power converter) of the switching period of the second frequency. In addition, each circuit of each power converter may be shifted sequentially by **1/N*P** (where **P** is the number of single-phase power converters, and **N** is the number of circuits in the power converter) of the switching period of the second frequency.

In some aspects of the disclosure herein, all output terminals **OUT** of each circuit of the same power converter (e.g., **F1, F2, F3...** and **FN** of power converter **96**) may be coupled to mutually coupled inductors (e.g., coupled inductors **L4, L5, L6 of** Fig. 2), each of which is connected to an output inductor (e.g., differential filter), similar to output inductor **L7** of Fig. 2.

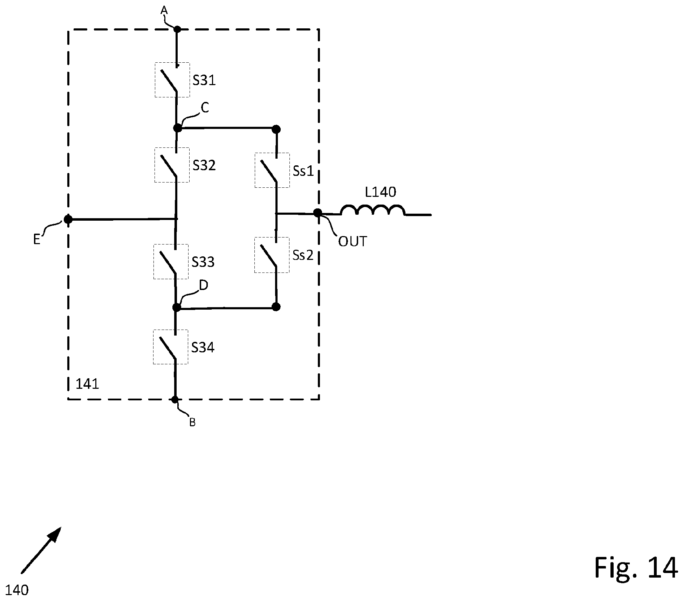

Reference is made to Fig. 14, which illustrates a circuit diagram of an electrical circuit (e.g., power converter) **140.** Electrical circuit **140** comprises circuit **141,** which may be an example of circuits **F1, F2, F3...**and **FN,** circuits **G1, G2, G3...**and **GN, H1, H2, H3...** and **HN** of Fig. 9, according to aspects of the disclosure. In some aspects, circuit **141** may be an active neutral-point clamped (e.g., ANPC) converter.

Circuit **140** includes electrical circuit (e.g., power converter) **141** and output inductor **L140.** Circuit **141** includes: a first plurality of switches **S31, S32, S33,** and **S34,** and a second plurality of switches **Ss1** and **Ss2.**

Electrical circuit **141** may be connected across input terminals **A** and **B.** (e.g., similar to input terminals **A** and **B** of Fig. 10). Electrical circuit **141** may be configured to connect to node **E,** which may be an intermediate node (e.g., the point of connection) between capacitors **C1** and **C2** of Fig. 9. In some embodiments, node **E** may be coupled to neutral and/or earth potential.

Electrical circuit **141** may convert the input direct-current (e.g., DC) voltage across input terminals **A** and **B** to an output alternating-current (e.g., AC) voltage at a first frequency (e.g., 50/60 Hz) at terminal **OUT.** Output inductor **L140** may be connected to terminal **OUT.**

A first terminal of switch **S31** may be coupled to input terminal **A** and a second terminal of switch **S31** may be coupled to node **C.** A first terminal of switch **S32** may be coupled to node **E** and a second terminal of switch **S32** may be coupled to node **C.** A first terminal of switch **S33** may be coupled to node **E** and a second terminal of switch **S33** may be coupled to node **D.** A first terminal of switch **S34** may be coupled to node **D** and a second terminal of switch **S34** may be coupled to input terminal **B.**

The first plurality of switches **S31, S32, S33,** and **S34** may be switched by a controller (e.g., controller 990 of Fig. 9) at a first frequency. The first frequency may be the output frequency of the voltage at terminal **OUT.** Switches **S31** and **S33** may be switched at the same time (e.g. simultaneously). Switches **S32** and **S34** may be switched in a complementary manner with respect to switches **S31** and **S33.** For example, during the positive half-cycle of the output voltage at terminal **OUT,** switches **S31** and **S33** may be ON and switches **S32** and **S34** may be OFF. During the negative half-cycle of the output voltage at terminal **OUT,** switches **S32** and **S34** may be ON and **S31** and **S33** may be OFF.

Switches **Ss1** and **Ss2** may be switched by a controller (e.g., controller 990 of Fig. 9) at a second frequency. The second frequency may be higher than the output frequency of the voltage at terminal **OUT.**

During the positive half-cycle of the output voltage at terminal **OUT,** switch **Ss1** may be switched according to the duty-cycle ratio **D** of the output voltage. During the positive half-cycle of the output voltage at terminal **OUT,** switch **Ss2** may be switched in a complementary manner with respect to switch **Ss1,** e.g., at **1-D.**

During the negative half-cycle of the output voltage at terminal **OUT,** switch **Ss2** may be switched according to the duty-cycle ratio **D** of the output voltage. During the negative half-cycle of the output voltage at terminal **OUT,** switch **Ss1** may be switched in a complementary manner with respect to switch **Ss2,** e.g., at **1-D.**

In a case where circuit **141** is used for each of circuits **F1, F2, F3...** and **FN,** circuits **G1, G2, G3...**and **GN, H1, H2, H3**...and **HN** of Fig. 9, all output terminals **OUT** of each circuit of the same power converter (e.g., **F1, F2, F3...** and **FN** of power converter 96) may be coupled together, to the same node of the output inductor of the corresponding power converter (for example, output inductor **L140**).

In a case where circuit **141** is used for each of circuits **F1, F2, F3...** and **FN,** circuits **G1, G2, G3...**and **GN, H1, H2, H3**...and **HN** of Fig. 9, each circuit of the same power converter (e.g., **F1, F2, F3...** and **FN** of power converter **96**) may be shifted sequentially by **1/N** (where **N** is the number of circuits in the power converter) of the switching period of the second frequency. In addition, each circuit of each power converter may be shifted sequentially by **1/N*P** (where **P** is the number of single-phase power converters, and **N** is the number of circuits in the power converter) of the switching period of the second frequency.

In some aspects of the disclosure herein, all output terminals **OUT** of each circuit of the same power converter (e.g., **F1, F2, F3...** and **FN** of power converter **96**) may be coupled to mutually coupled inductors (e.g., coupled inductors **L4, L5, L6** of Fig. 2), each of which is connected to an output inductor (e.g., differential filter), similar to output inductor **L7** of Fig. 2.

In some aspects of the disclosure herein, in case where a power converter (e.g., power converter **96** comprising **F1, F2, F3...** and **FN)** comprises a plurality of parallel-connected circuits of circuit 141, the first plurality of switches **S31, S32, S33,** and **S34** may be used for each of the parallel-connected circuits. For example, circuit 10 of Fig. 1 is an example for a power converter comprising N parallel-connected circuits, similar to circuit 141. The series connection of switches **Sa1**, **Sa2, Sa3** and **Sa4** may be common to each of the N parallel-connected circuits. The use of common switches, while achieving the same functionality, may reduce the size and cost of circuit **10.**

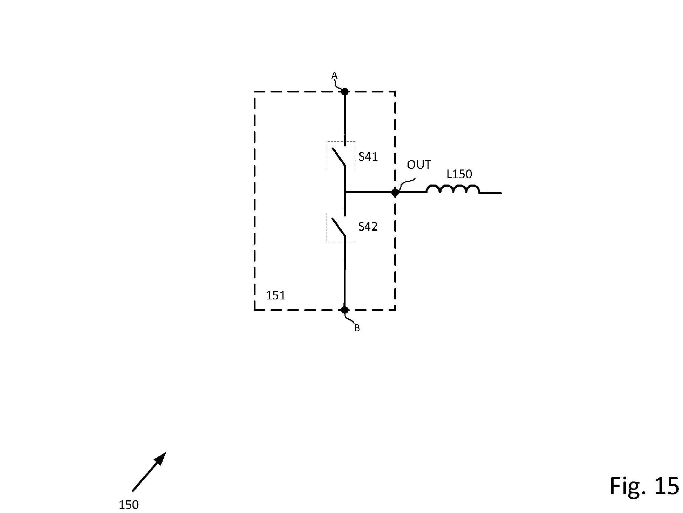

Reference is made to Fig. 15, which illustrates a circuit diagram of an electrical circuit (e.g., power converter) **150.** Electrical circuit **150** comprises circuit **151,** which is an example of each of circuits **A1, A2, A3...** and **AN, B1, B2, B3...** and **BN,** and **C1, C2, C3...** and **CN** of Fig. 10, according to aspects of the disclosure. In some aspects, circuit **151** may be a half-bridge converter.

Circuit **150** includes electrical circuit (e.g., power converter) **151** and output inductor **L150.** Circuit **151** includes: switches **S41** and **S42.**

Electrical circuit **151** may be connected across input terminals **A** and **B.** (e.g., similar to input terminals **A** and **B** of Fig. 10). Electrical circuit **151** may convert the input direct-current (e.g., DC) voltage across input terminals **A** and **B** to an output alternating-current (e.g., AC) voltage at terminal **OUT.** Output inductor **L150** may be connected to terminal **OUT.**

Switches **S41** and **S42** may be series-connected across input terminals **A** and **B.** A first terminal of switch **S41** may be coupled to input terminal **A** and a second terminal of switch **S41** may be coupled to terminal **OUT.** A first terminal of switch **S42** may be coupled to terminal **OUT** and a second terminal of switch **S42** may be coupled to input terminal **B.**

Switches **S41** and **S42** may be switched by a controller (e.g., controller 980 of Fig. 10) in a complementary manner at a second frequency and according to a duty-cycle ratio of the output voltage at terminal **OUT.** The second frequency may be higher than the first frequency. For example, during the positive half-cycle of the output voltage at terminal **OUT,** switch **S41** may be switched at a duty-cycle ratio **D** of the output voltage at terminal **OUT,** while switch **S42** may be switched at **1-D.** When switch **S41** is OFF, switch **S42** may be ON, and vice versa. During the negative half-cycle of the output voltage at terminal **OUT,** switch **S42** may be switched at the duty-cycle ratio **D** of the output voltage at terminal **OUT,** while switch **S41** may be switched at **1-D.**

In a case where circuit **151** is used for each of circuits **A1, A2, A3...** and **AN, B1, B2, B3...** and **BN,** and **C1, C2, C3...** and **CN** of Fig. 10, all output terminals **OUT** of each circuit of the same power converter (e.g., **A1, A2, A3... and AN**) may be coupled together, to the same node of the output inductor of the corresponding power converter (for example, output inductor **L150**). In some aspects of the disclosure herein, all output terminals **OUT** of each circuit of the same power converter (e.g., **A1, A2, A3...** and **AN**) may be coupled to mutually coupled inductors (e.g., coupled inductors **L4, L5, L6** of Fig. 2), each of which is connected to an output inductor (e.g., differential filter), similar to output inductor **L7** of Fig. 2.

In some aspects, circuit **151** may function as a single-phase power converter. For example, circuit **151** may replace each of the single-phase converter circuits **91, 92** and **93** in Fig. 10.

The invention is defined by the appended claims.

## Claims

1. An apparatus, wherein the apparatus is a single-phase, three-phase, or multi-phase power converter, comprising:
a pair of input terminals (A,B) configured to receive a direct current, DC, voltage;
a first series connection comprising a first capacitor (C1) and a second capacitor (C2), wherein the first series connection is connected across the pair of input terminals, and the first capacitor is connected to the second capacitor at a first terminal (E);
a single-phase converter circuit (20;11) coupled to the pair of input terminals and configured to convert the DC voltage to an alternating-current, AC, voltage at an output terminal (J) as one phase output of the single-phase, three-phase, or multi-phase power converter;
the single-phase converter circuit (20;11) comprising:
a second series connection comprising a first switch (Sc1), a second switch (Sc2), a third switch (Sc3) and a fourth switch (Sc4), wherein the second series connection is connected across the pair of input terminals (A,B), wherein the first switch is connected to the second switch at a second terminal (C), wherein the second switch is connected to the third switch at a third terminal (F), wherein the third switch is connected to the fourth switch at a fourth terminal (D);
a first additional series connection, comprising two or more switches (M1,M2) of the first additional series connection across the second terminal (C) and the fourth terminal (D) and a first intermediate node (IN1) between the two or more switches of the first additional series connection;
a second additional series connection comprising two or more switches (M3,M4) of the second additional series connection across the second terminal (C) and the fourth terminal (D) and a second intermediate node (IN2) between the two or more switches of the second additional series connection;
a first leg comprising a first inductor (L4) and a first relay (R1), wherein the first leg is connected between the first intermediate node (IN1) and the output terminal (J); and
a second leg comprising a second inductor (L5) and a second relay (R2), wherein the second leg is connected between the second intermediate node (IN2) and the output terminal (J).

2. The apparatus of claim 1, wherein the first terminal (E) is connected to the third terminal (F).

3. The apparatus of any preceding claim, wherein the output terminal (J) provides the one phase output with respect to at least one of a neutral potential, an earth potential, or the first terminal.

4. The apparatus of any preceding claim, wherein the first inductor (L4) and the second inductor (L5) are configured to have mutual inductance.

5. The apparatus of any preceding claim, further comprising a controller (180) configured to control the first switch (Sc1), the second switch (Sc2), the third switch (Sc3), the fourth switch (Sc4), the two or more switches (M1,M2) of the first additional series connection, and the two or more switches (M3,M4) of the second additional series connection.

6. The apparatus of claim 5, wherein the controller (180) is configured to switch the first switch (Sc1) in a complementary manner with respect to the second switch (Sc2).

7. The apparatus of claims 5 or 6, wherein the controller (180) is configured to switch the first switch (Sc1) in correspondence with the third switch (Sc3).

8. The apparatus of any of claims 5-7, wherein the controller (180) is configured to switch the first switch (Sc1), the second switch (Sc2), the third switch (Sc3), and the fourth switch (Sc4) at a first frequency, and to switch the two or more switches (M1,M2) of the first additional series connection at a second frequency.

9. The apparatus of any of claims 5-8, wherein the two or more switches (M1,M2) of the first additional series connection comprises a fifth switch and a sixth switch,
wherein the controller (180) is configured to switch the fifth switch and the sixth switch in a complementary manner.

10. The apparatus of any of claims 5-9, wherein the controller (180) is configured to switch the first additional series connection in a phase-shifted manner with respect to the second additional series connection.

11. The apparatus of any of claim 5-10, wherein the controller (180) is configured to switch the two or more switches (M1,M2) of the first additional series connection, based on a duty cycle ratio.

12. The apparatus of claim 5, wherein the controller (180) is configured to sense the current flowing through the first inductor (L4) of the first leg and the current flowing through the second inductor (L5) of the second leg and to balance said currents.

13. The apparatus of any of claims 5-12, wherein the controller (180) is configured to open or close the first relay (R1) based on a first output of a first sensor configured to measure a first current of the first inductor (L4); and
open or close the second relay (R2) based on a second output of a second sensor configured to measure a second current of the second inductor.

14. A system comprising a direct current, DC, power source and an apparatus according to any of claims 1-13, wherein the DC power source is configured to supply the DC voltage across the pair of input terminals of the apparatus.

## Patentansprüche

1. Vorrichtung, wobei die Vorrichtung ein einphasiger, dreiphasiger oder mehrphasiger Leistungswandler ist, umfassend:
ein Paar von Eingangsanschlüssen (A,B), die dazu konfiguriert sind, eine Gleichstrom-, DC-, Spannung zu empfangen;
eine erste Reihenschaltung mit einem ersten Kondensator (C1) und einem zweiten Kondensator (C2), wobei die erste Reihenschaltung über das Paar von Eingangsanschlüssen geschaltet ist und der erste Kondensator an einem ersten Anschluss (E) mit dem zweiten Kondensator verbunden ist;
eine einphasige Wandlerschaltung (20;11), die mit dem Paar von Eingangsanschlüssen gekoppelt und dazu konfiguriert ist, die DC-Spannung an einem Ausgangsanschluss (J) in eine Wechselstrom-, AC-, Spannung als einen Phasenausgang des einphasigen, dreiphasigen oder mehrphasigen Leistungswandlers umzuwandeln;
wobei die einphasige Wandlerschaltung (20;11) aufweist:
eine zweite Reihenschaltung mit einem ersten Schalter (Sc1), einem zweiten Schalter (Sc2), einem dritten Schalter (Sc3) und einem vierten Schalter (Sc4), wobei die zweite Reihenschaltung über das Paar von Eingangsanschlüssen (A,B) geschaltet ist, wobei der erste Schalter an einem zweiten Anschluss (C) mit dem zweiten Schalter verbunden ist, wobei der zweite Schalter an einem dritten Anschluss (F) mit dem dritten Schalter verbunden ist, wobei der dritte Schalter an einem vierten Anschluss (D) mit dem vierten Schalter verbunden ist;
eine erste zusätzliche Reihenschaltung, die zwei oder mehr Schalter (M1,M2) der ersten zusätzlichen Reihenschaltung über den zweiten Anschluss (C) und den vierten Anschluss (D) und einen ersten Zwischenknoten (IN1) zwischen den zwei oder mehr Schaltern der ersten zusätzlichen Reihenschaltung aufweist;
eine zweite zusätzliche Reihenschaltung mit zwei oder mehr Schaltern (M3,M4) der zweiten zusätzlichen Reihenschaltung über den zweiten Anschluss (C) und den vierten Anschluss (D) und einem zweiten Zwischenknoten (IN2) zwischen den zwei oder mehr Schaltern der zweiten zusätzlichen Reihenschaltung;
einen ersten Zweig mit einer ersten Induktivität (L4) und einem ersten Relais (R1), wobei der erste Zweig zwischen den ersten Zwischenknoten (IN1) und den Ausgangsanschluss (J) geschaltet ist; und
einen zweiten Zweig mit einer zweiten Induktivität (L5) und einem zweiten Relais (R2), wobei der zweite Zweig zwischen den zweiten Zwischenknoten (IN2) und den Ausgangsanschluss (J) geschaltet ist.

2. Vorrichtung nach Anspruch 1, wobei der erste Anschluss (E) mit dem dritten Anschluss (F) verbunden ist.

3. Vorrichtung nach einem der vorhergehenden Ansprüche, wobei der Ausgangsanschluss (J) den einen Phasenausgang in Bezug auf mindestens eines von einem Neutralpotential, einem Erdpotential oder dem ersten Anschluss bereitstellt.

4. Vorrichtung nach einem der vorhergehenden Ansprüche, wobei die erste Induktivität (L4) und die zweite Induktivität (L5) dazu konfiguriert sind, Gegeninduktivität aufzuweisen.

5. Vorrichtung nach einem der vorhergehenden Ansprüche, ferner mit einer Steuerung (180), die dazu konfiguriert ist, den ersten Schalter (Sc1), den zweiten Schalter (Sc2), den dritten Schalter (Sc3), den vierten Schalter (Sc4), die zwei oder mehr Schalter (M1,M2) der ersten zusätzlichen Reihenschaltung und die zwei oder mehr Schalter (M3,M4) der zweiten zusätzlichen Reihenschaltung zu steuern.

6. Vorrichtung nach Anspruch 5, wobei die Steuerung (180) dazu konfiguriert ist, den ersten Schalter (Sc1) in Bezug auf den zweiten Schalter (Sc2) komplementär zu schalten.

7. Vorrichtung nach Anspruch 5 oder 6, wobei die Steuerung (180) dazu konfiguriert ist, den ersten Schalter (Sc1) korrespondierend mit dem dritten Schalter (Sc3) zu schalten.

8. Vorrichtung nach einem der Ansprüche 5-7, wobei die Steuerung (180) dazu konfiguriert ist, den ersten Schalter (Sc1), den zweiten Schalter (Sc2), den dritten Schalter (Sc3) und den vierten Schalter (Sc4) mit einer ersten Frequenz zu schalten und die zwei oder mehr Schalter (M1,M2) der ersten zusätzlichen Reihenschaltung mit einer zweiten Frequenz zu schalten.

9. Vorrichtung nach einem der Ansprüche 5-8, wobei die zwei oder mehr Schalter (M1,M2) der ersten zusätzlichen Reihenschaltung einen fünften Schalter und einen sechsten Schalter aufweisen,
wobei die Steuerung (180) dazu konfiguriert ist, den fünften Schalter und den sechsten Schalter komplementär zu schalten.

10. Vorrichtung nach einem der Ansprüche 5-9, wobei die Steuerung (180) dazu konfiguriert ist, die erste zusätzliche Reihenschaltung in Bezug auf die zweite zusätzliche Reihenschaltung phasenverschoben zu schalten.

11. Vorrichtung nach einem der Ansprüche 5-10, wobei die Steuerung (180) dazu konfiguriert ist, die zwei oder mehr Schalter (M1,M2) der ersten zusätzlichen Reihenschaltung basierend auf einem Tastverhältnis zu schalten.

12. Vorrichtung nach Anspruch 5, wobei die Steuerung (180) dazu konfiguriert ist, den durch die erste Induktivität (L4) des ersten Zweigs fließenden Strom und den durch die zweite Induktivität (L5) des zweiten Zweigs fließenden Strom zu erfassen und die genannten Ströme auszugleichen.

13. Vorrichtung nach einem der Ansprüche 5-12, wobei die Steuerung (180) dazu konfiguriert ist, das erste Relais (R1) basierend auf einem ersten Ausgang eines ersten Sensors, der dazu konfiguriert ist, einen ersten Strom der ersten Induktivität (L4) zu messen, zu öffnen oder zu schließen; und
das zweite Relais (R2) basierend auf einem zweiten Ausgang eines zweiten Sensors, der dazu konfiguriert ist, einen zweiten Strom der zweiten Induktivität zu messen, zu öffnen oder zu schließen.

14. System, umfassend eine Gleichstrom-, DC-, Leistungsquelle und eine Vorrichtung nach einem der Ansprüche 1-13, wobei die DC-Leistungsquelle dazu konfiguriert ist, die DC-Spannung über das Paar von Eingangsanschlüssen der Vorrichtung bereitzustellen.

## Revendications

1. Appareil, dans lequel l'appareil est un convertisseur de puissance monophasé, triphasé ou multiphasé, comprenant :
une paire de bornes d'entrée (A, B) configurée pour recevoir une tension de courant continu, CC ;
une première liaison en série comprenant un premier condensateur (C1) et un deuxième condensateur (C2), dans lequel la première liaison en série est reliée avec la paire de bornes d'entrée, et le premier condensateur est relié au deuxième condensateur au niveau d'une première borne (E) ;
un circuit de convertisseur monophasé (20 ; 11) couplé avec la paire de bornes d'entrée et configuré pour convertir la tension CC en une tension de courant alternatif, CA, au niveau d'une borne de sortie (J) en tant que sortie de phase du convertisseur de puissance monophasé, triphasé ou multiphasé ;
le circuit de convertisseur monophasé (20 ; 11) comprenant :
une deuxième liaison en série comprenant un premier commutateur (Sc1), un deuxième commutateur (Sc2), un troisième commutateur (Sc3) et un quatrième commutateur (Sc4), dans lequel la deuxième liaison en série est reliée avec la paire de bornes d'entrée (A, B), dans lequel le premier commutateur est relié au deuxième commutateur au niveau d'une deuxième borne (C), dans lequel le deuxième commutateur est relié au troisième commutateur au niveau d'une troisième borne (F), dans lequel le troisième commutateur est relié au quatrième commutateur au niveau d'une quatrième borne (D) ;
une première liaison en série supplémentaire, comprenant deux ou plusieurs commutateurs (M1, M2) de la première liaison en série supplémentaire avec la deuxième borne (C) et la quatrième borne (D) et un premier nœud intermédiaire (IN1) entre les deux ou plusieurs commutateurs de la première liaison en série supplémentaire ;
une deuxième liaison en série supplémentaire comprenant deux ou plusieurs commutateurs (M3, M4) de la deuxième liaison en série supplémentaire avec la deuxième borne (C) et la quatrième borne (D) et un deuxième nœud intermédiaire (IN2) entre les deux ou plusieurs commutateurs de la deuxième liaison en série supplémentaire ;
une première branche comprenant un premier inducteur (L4) et un premier relais (R1), dans lequel la première branche est reliée entre le premier nœud intermédiaire (IN1) et la borne de sortie (J) ; et
une deuxième branche comprenant un deuxième inducteur (L5) et un deuxième relais (R2), dans lequel la deuxième branche est reliée entre le deuxième nœud intermédiaire (IN2) et la borne de sortie (J).

2. Appareil selon la revendication 1, dans lequel la première borne (E) est reliée à la troisième borne (F).

3. Appareil selon l'une quelconque des revendications précédentes, dans lequel la borne de sortie (J) fournit la une sortie de phase relativement à au moins l'un parmi un potentiel neutre, un potentiel de la masse ou la première borne.

4. Appareil selon l'une quelconque des revendications précédentes, dans lequel le premier inducteur (L4) et le deuxième inducteur (L5) sont configurés pour présenter une inductance mutuelle.

5. Appareil selon l'une quelconque des revendications précédentes, comprenant en outre un dispositif de commande (180) configuré pour commander le premier commutateur (Sc1), le deuxième commutateur (Sc2), le troisième commutateur (Sc3), le quatrième commutateur (Sc4), les deux ou plusieurs commutateurs (M1, M2) de la première liaison en série supplémentaire et les deux ou plusieurs commutateurs (M3, M4) de la deuxième liaison en série supplémentaire.

6. Appareil selon la revendication 5, dans lequel le dispositif de commande (180) est configuré pour commuter le premier commutateur (Sc1) d'une manière complémentaire par rapport au deuxième commutateur (Sc2).

7. Appareil selon la revendication 5 ou 6, dans lequel le dispositif de commande (180) est configuré pour commuter le premier commutateur (Sc1) en correspondance avec le troisième commutateur (Sc3).

8. Appareil selon l'une quelconque des revendications 5-7, dans lequel le dispositif de commande (180) est configuré pour commuter le premier commutateur (Sc1), le deuxième commutateur (Sc2), le troisième commutateur (Sc3) et le quatrième commutateur (Sc4) à une première fréquence, et pour commuter les deux ou plusieurs commutateurs (M1, M2) de la première liaison en série supplémentaire à une deuxième fréquence.

9. Appareil selon l'une quelconque des revendications 5-8, dans lequel les deux ou plusieurs commutateurs (M1, M2) de la première liaison en série supplémentaire comprend un cinquième commutateur et un sixième commutateur,
dans lequel le dispositif de commande (180) est configuré pour commuter le cinquième commutateur et le sixième commutateur d'une manière complémentaire.

10. Appareil selon l'une quelconque des revendications 5-9, dans lequel le dispositif de commande (180) est configuré pour commuter la première liaison en série supplémentaire d'une manière déphasée par rapport à la deuxième liaison en série supplémentaire.

11. Appareil selon l'une quelconque des revendications 5-10, dans lequel le dispositif de commande (180) est configuré pour commuter les deux ou plusieurs commutateurs (M1, M2) de la première liaison en série supplémentaire, sur la base d'un rapport de régime d'utilisation.

12. Appareil selon la revendication 5, dans lequel le dispositif de commande (180) est configuré pour détecter le courant circulant à travers le premier inducteur (L4) de la première branche et le courant circulant à travers le deuxième inducteur (L5) de la deuxième branche, et pour équilibrer lesdits courants.

13. Appareil selon l'une quelconque des revendications 5-12, dans lequel le dispositif de commande (180) est configuré pour ouvrir ou fermer le premier relais (R1) sur la base d'une première sortie d'un premier capteur configuré pour mesurer un premier courant du premier inducteur (L4) ; et
ouvrir ou fermer le deuxième relais (R2) sur la base d'une deuxième sortie d'un deuxième capteur configuré pour mesurer un deuxième courant du deuxième inducteur.

14. Système comprenant une source d'alimentation de courant continu, CC, et un appareil selon l'une quelconque des revendications 1-13, dans lequel la source d'alimentation CC est configurée pour fournir la tension CC à travers la paire de bornes d'entrée de l'appareil.
